# EUROPEAN PATENT SPECIFICATION

(11) **EP 0 514 926 B1**
(45) Date of publication and mention of the grant of the patent: **24.02.1999**
(21) Application number: 92108686.4
(22) Date of filing: 22.05.1992
(51) Int. Cl.: H04N 9/64, H04N 5/14, G06T 1/00, G06T 1/20

(54) **A moving image processor**
Bewegtbildsignal-Verarbeiter
Processeur d'image mobile

(30) Priority: 23.05.1991 JP 118854/91
(43) Date of publication of application: 25.11.1992
(73) Proprietor: FUJITSU LIMITED, Kawasaki-shi, Kanagawa 211 (JP)
(72) Inventor: Kawaguchi, Naohisa, c/o Fujitsu Limited, Kawasaki-shi, Kanagawa, 211 (JP); Iijima, Yasuhiro, c/o Fujitsu Limited, Kawasaki-shi, Kanagawa, 211 (JP); Saito, Kazumi, c/o Fujitsu Limited, Kawasaki-shi, Kanagawa, 211 (JP)
(74) Representative: Schmidt-Evers, Jürgen, Dipl.-Ing.

(56) References cited:
- EP-A- 0 201 261
- WO-A-85/05707
- WO-A-87/04826
- US-A- 4 363 104
- PATENT ABSTRACTS OF JAPAN vol. 12, no. 253 (P-731)16 July 1988 & JP-A-63 040 971 (YOKOGAWA ELECTRIC CORP.) 22 February 1988
- PATENT ABSTRACTS OF JAPAN vol. 11, no. 164 (P-580)27 May 1987 & JP-A-01 296 462 (YOKOGAWA MEDICAL SYST. LTD.) 27 December 1986
- IEEE TRANSACTIONS ON COMMUNICATIONS vol. COM-26, no. 5 , May 1978 pages 594 - 600 ROBERT JOHNSON ET AL. 'A Digital Television Sequence Store'

## Description

### Background of the Invention

### Field of the Invention

This invention pertains to a moving image processor processing an analog image input at a video rate, and more particularly to a versatile moving image processor capable of flexibly changing the processing content and the hardware configuration at a reasonable cost.

### Description of the Related Art

With advances in microprocessors featuring higher speeds and lower costs, an easier realization of computer graphic animation of a moving image is sought after.

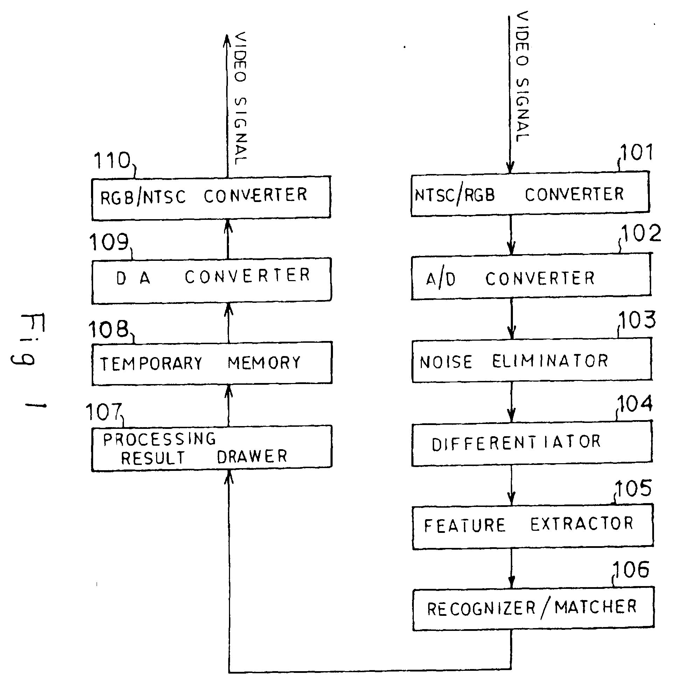

Figure 1 is a block diagram of an exemplary conventional moving image processor.

The moving image processor shown in Figure 1 comprises an NTSC/RGB converter 101 for converting an NTSC signal into an RGB signal, an A/D converter 102, a noise eliminator 103, a differentiator 104, a feature extractor 105, a recognizer/matcher 106, a processing result drawer 107, a temporary storer 108, a D/A converter 109, and an RGB/NTSC converter for converting an RGB signal into an NTSC signal.

The moving image processor recognizes and matches a moving image by extracting its features, as well as draws the processing result.

The moving image processor has its processor elements (e.g. the noise eliminator 103, the differentiator 104, the feature extractor 105, ....) connected in pipelines, thereby having a moving image inputted to the NTSC/RGB converter 101 to be pipelined to be outputted from the RGB/NTSC converter 110.

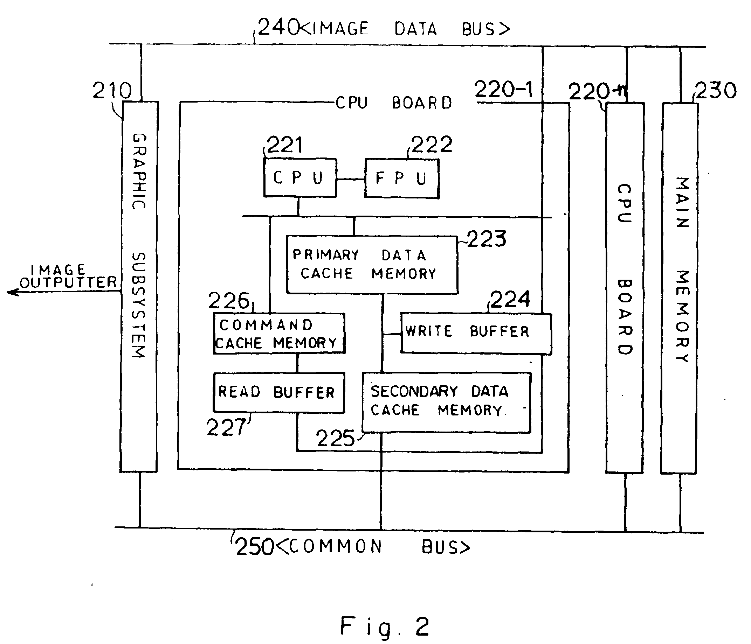

Figure 2 is a block diagram of another exemplary conventional moving image processor.

The moving image processor shown in Figure 2 comprises a graphic subsystem 210, a plurality of CPU boards 220 (220-1, ...., 220-n) and a main memory 230, each connected with an image data bus 240 and a common bus 250.

Each of the plurality of CPU boards 220 comprises a corresponding one of CPUs 221, FPUs 222, primary data cache memories 223, write buffers 224, secondary data cache memories 225, command cache memories 226 and read buffers 227, which expedite the processes on each of the CPU boards 220.

Because the CPU boards 220 exist in plurality, their operations can be paralleled whose results obtained as moving images (video signals) are outputted from the graphic subsystems 210.

When a plurality of processor elements are connected in pipelines as shown in Figure 1, there is a disadvantage that the realizable function is limited due to a limit on the pipeline processes. In addition, there is a problem that the processing content or the hardware configuration cannot be flexibly changed.

When the plurality of CPU boards 220 form a moving image processor, because the CPU boards 220 operate in parallel interactively, it becomes necessary to expedite the entirety for sufficiently taking advantage of the device performance, which makes hardware rather expensive.

There are known some further data processing systems in the state of the art in which parallel processing is carried out.

First, from the Japanese laid open patent application JP-A-61 296 462 there is known a high speed data processing system enclosing the features constituting the prior art of the processor according to the present invention. To attain a high speed processing of data the disclosed main memory device CM comprises a plurality of arithmetic processors FPI-FP4 each of them being provided with an exclusive memory device PM1-PM4 and including multipliers and adders. The plurality of arithmetic processors FP1-FP4 are connected to input means and output means by busses for sequentially writing and reading to and from the memory devices, respectively. In data processing, various data are transferred to the memory CM and sent to the units FP1-FP4 to execute parallel processing of these data through the exclusive memories, the adders and the multipliers. In this case, the data processing time can be reduced by the small number of times of simple synchronizing control in inverse proportion to the number of arithmetic processing units.

As the results of the processes must be finally summed up, each signal indicating the completion of each of a process is output to each of the arithmetic processors FP1-FP4. The signal line passing the signal which indicates the completion of the process from each processor is connected like a bus connection. Each of the processors is controlled so that it performs its own process after verifying that the processes of all of the processors FP1-FP4 are completed. That is, unless the processes of all of the processors FP1-DP4 are completed, control is not transferred to the next step.

Further, the article "A Digital Television Sequence Store", IEEE Transactions on Communications, Vol. COM-26, No. 5, May 1978, pages 594-600 by R. Johnston, J. Mastronardi and G. Mony describes the so-called Digital Video Store (DVS) system as a tool for developing algorithms to process live television sequences. In this system a plurality of arranged buffer memories are sequentially switched to process images as to achieve an effectively higher transfer rate by this parallel processing. In theory, there are enough memories to allow each sufficient time to process an image.

The EP-A-0 201 261 discloses a processor for performing logical operations on picture element data bytes (pixels). The system in this document quickly processes picture elements, each comprising a plurality of bits, by assigning a conversion table to each bit plane and performing parallel operations.

In the WO-A-87/04826 there is disclosed a multi-processor apparatus which includes an array of separately addressable memory units and an array of separately addressable processors. A first unidirectional data bus delivers data from a selected processor to a selected memory unit and a second unidirectional data bus delivers data from a selected memory unit to a selected processor to perform parallel operations. Arbitrator circuits are provided to control the flow of data to these data buses according to a predetermined priority.

An image processor including a plurality of processor elements, a host processor, an image memory, etc. is known from the Patent Abstracts of Japan, Vol. 11, No. 164 (P-850) & JP-A-63 040 971. In this system the image processors process simultaneously stored charcters, wherein a conflict for a bus is avoided between the host processor and the processor elements by a switch through a multiplexer and a conflict for a bus is avoided among the processor elements by an arbitrator.

Further, a parallel operation system where a plurality of processor elements are connected for common use on a bus is dislosed in US-A-4,363,104. In this system video data are transmitted with address information via a bus, and each processor element monitors the address information to fetch data necessary to the processing element. In this process, the necessary data are copied and transmitted to a plurality of processor elements, wherein each of the processor elements stores necessary data inside the processor element and performs operations independently. The operation results are transmitted via a bus together with the address information added. Arbitration is specifically avoided, as the delays are considered by the authors to be excessive.

### Summary of the Invention

This invention is premised on a moving image processor receiving a moving image in a video signal and image-processing the moving image in the digital image frame and outputting a video signal obtained as the processing result.

An object of the present invention is to provide a moving image processor comprising a plurality of processor elements and temporary storers processing in parallel where the processing is effectively controlled with no conflicts ocurring.

According to the present invention, this object is achieved by a moving image processor according to claim 1. The dependent claims define preferred and advantageous embodiments of the present invention.

This invention enables various functions to be easily added and the processing matters and hardware structures to be flexibly modified and a high-speed moving image processor to be realized at a low cost, since a plurality of processor elements independently perform parallel processes for a moving image effectively controlled by an arbitrator.

### Brief Description of the Drawings

One of skill in the art can easily understand additional features and objects of this invention from the description of the preferred embodiments and some of the attached drawings. In the drawings:
Figure 1 is a block diagram of an exemplary conventional moving image processor;
Figure 2 is a block diagram of another exemplary conventional moving image processor;
Figure 3 is a block diagram showing a first principle of a moving image processor;
Figure 4 is a timing chart showing operations pursuant to the first principle;
Figure 5 is a block diagram showing a second principle of a moving image processor;
Figure 6 is a timing chart showing operations pursuant to the second principle;
Figure 7 is a block diagram showing a third principle of moving image processor, according to which the invention is constructed.
Figure 8 is a block diagram of a first example of a moving image processor.
Figure 9 shows the configuration and operation of a vertical synchronous pulse regenerator;
Figure 10 is an explanatory chart for writing data into a temporary storer, i.e. a semiconductor memory;
Figure 11 is a block diagram of a multiplexer shown in the first example;
Figure 12 is an explanatory chart illustrating the configuration of the multiplexer shown in Figure 11 and used in the first example;
Figure 13 shows a regeneration range list unit used on its first example;

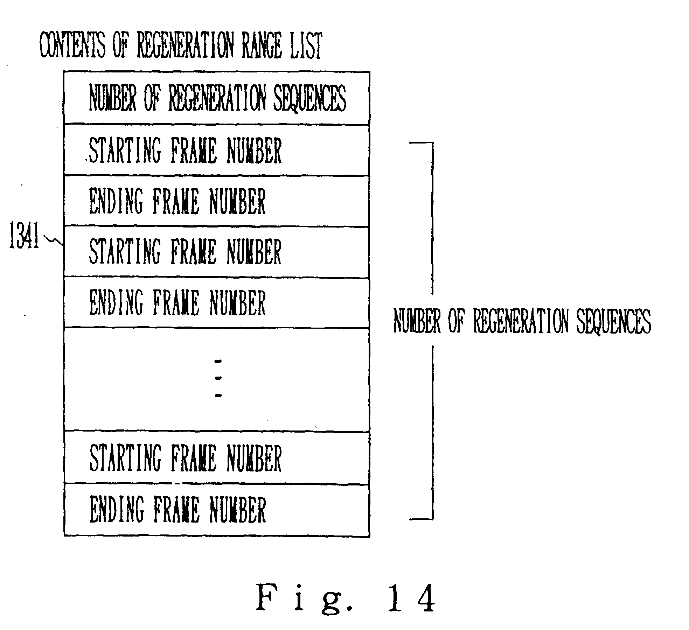

Figure 14 designates an explanatory view of a regeneration range list;
Figure 15 is a block diagram of a second example of a moving image processor;
Figure 16 is a block diagram of a switch signal generator shown in Figure 15;
Figure 17 is a block diagram of a first preferred embodiment of a moving image processor according to this invention;
Figure 18A is a block diagram of an arbitrator for an operation in a first case without a wait for an incomplete unit;
Figure 18B is a timing chart for the operation of the arbitrator in the first case without a wait for an incomplete unit;
Figure 18C is a control flowchart for the operation of the arbitrator in the first case without a wait for an incomplete unit;
Figure 19A is a block diagram of the arbitrator for an operation in a second case with a wait for an incomplete unit;
Figure 19B is a timing chart for the operation of the arbitrator in the second case with a wait for an incomplete unit;
Figure 19C is a control flowchart for the operation of the arbitrator in the second case with a wait for an incomplete unit;
Figures 20A and 20B are control flowcharts for a processor element;
Figure 21A is a timing chart showing operations of the first preferred embodiment of this invention in the first case without a wait for an incomplete unit shown in Figures 18A, 18B and 18C;
Figure 21B is a timing chart showing operations of the first preferred embodiment of this invention in the second case with a wait for an incomplete unit shown in Figures 19A, 19B and 19C;
Figure 22 is a block diagram of a system based on a combination of the arbitrator and another multiplexer;
Figure 23 is a block diagram of a second preferred embodiment of this invention;
Figure 24 is a timing chart showing an operation of the second preferred embodiment of this invention;
Figure 25 is a block diagram of a third preferred embodiment of this invention;
Figure 26 is a block diagram of a third example of a moving image processor; and
Figure 27 is a block diagram of a fourth example of a moving image processor.

### Description of the Preferred Embodiments

### Explanation of the Underlying Principles

### A first Principle

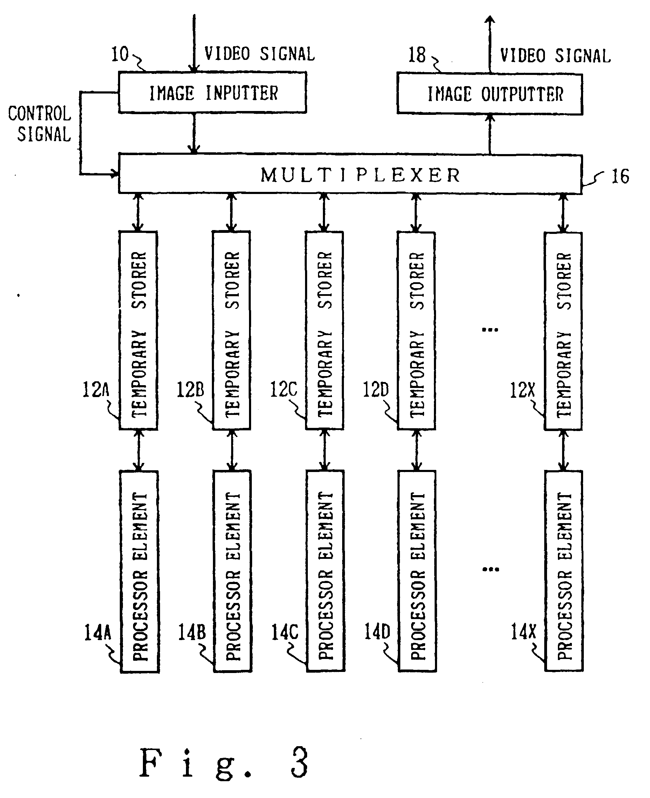

Figure 3 is a block diagram showing a first principle of a moving image processor.

A moving image processor pursuant to the first principle comprises an image inputter 10 for converting a video signal being analog into a digital signal in a time series and for generating a control signal synchronized with frames of the video signal; a plurality of temporary storers 12 (12A, 12B, ...., 12X) into which the digital signal is written in frame units of the video signal; a plurality of processor elements 14 (14A, 14B, ...., 14X) respectively for processing image data being memory contents of the plurality of temporary storers 12 (12A, 12B, ...., 12X); a multiplexer 16, synchronized with the control signal, for sequentially writing the digital signal to the plurality of temporary storers 12 (12A, 12B, ...., 12X) in frame units of the video signal and for sequentially reading the memory contents from the plurality of temporary storers 12 (12A, 12B, ...., 12X); and an image outputter 18 for sequentially outputting the memory contents of the plurality of temporary storers 12 (12A, 12B, ...., 12X) read by the multiplexer 16 after converting them into an analog video signal.

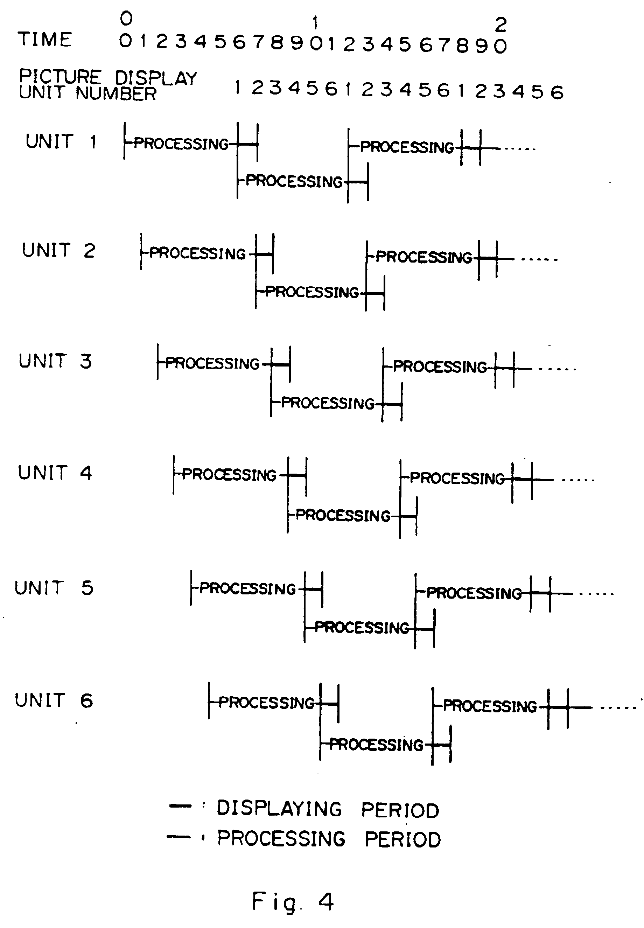

Figure 4 is a timing chart showing operations pursuant to the first principle.

Operations pursuant to the first principle are explained below by referring to Figures 3 and 4.

Here, the plurality of temporary storers 12 (12A, 12B, ...., 12X) and the plurality of processor elements 14 (14A, 14B, ...., 14X) shown in Figure 3 are paired (e.g. temporary storer 12A and processor element 14A) into six [6] units 1, 2, 3, 4, 5 and 6.

Because the multiplexer 16 shown in Figure 3 operates in frame units of the video signal by the control signal from the image inputter 10, the six [6] units 1, 2, 3, 4, 5 and 6 independently perform, in staggered parallel, processes for each frame at every six [6] frame timings, such as {0, 1, 2, 3, 4 and 5} and {6, 7, 8, 9, 10 and 11}. The six [6] processes for each one [1] frame have sequential skew of one [1] frame timing, and include inputs of the digital signal in a time series to the plurality of temporary storers 12 (12A, 12B, ...., 12X) during an image processing and outputs of the digital signal in a time series from the plurality of temporary storers 12 (12A, 12B, ...., 12X) during a moving image reconstruction. That is, the six [6] units 1, 2, 3, 4, 5 and 6 share processes for every frame and independently perform the processes in staggered parallel.

Consequently, it becomes possible to extend the time allowed for the six [6] units 1, 2, 3, 4, 5 and 6 to process one [1] frame to six [6] frame timings and to reduce the memory access speed and the processing speed to one-sixth [1/6].

Accordingly, a provision of a plurality of conventional lower-performance processors (units) enable a moving image to be processed at a low cost as with a single higher performance processor.

Also, because the number of units can be adjusted to the required processing power, hardware can be modified quite easily.

Further, because respective units are not pipelined, they can independently operate in parallel, which makes it easier to flexibly alter the processing matters, such as writing image data created by the plurality of processor elements 14 (14A, 14B, ...., 14X) respectively into the plurality of temporary storers 12 (12A, 12B, ...., 12X).

### A Second Principle

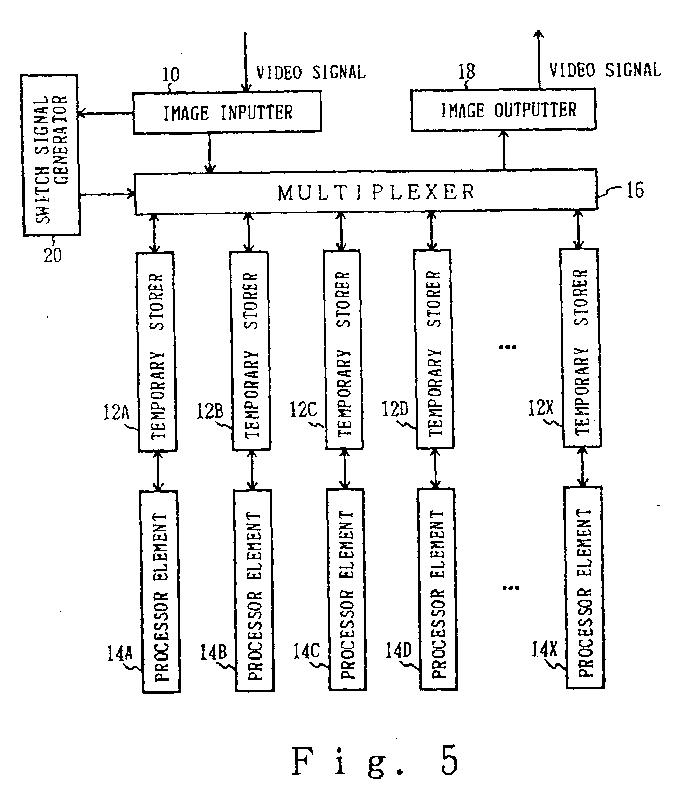

Figure 5 is a block diagram showing a second principle of a moving image processor.

A moving image processor pursuant to the second principle comprises an image inputter 10 for converting a video signal being analog into a digital signal in a time series and for generating a control signal synchronized with frames of the video signal; a plurality of temporary storers 12 (12A, 12B, ...., 12X) into which the digital signal is written in frame units of the video signal; a plurality of processor elements 14 (14A, 14B, ...., 14X) respectively for processing image data being memory contents of the plurality of temporary storers 12 (12A, 12B, ...., 12X); a multiplexer 16 for sequentially writing pieces split from the digital signal converted from one [1] frame of the video signal respectively to the plurality of temporary storers 12 (12A, 12B, ...., 12X) and for sequentially reading the memory contents from the plurality of temporary storers 12 (12A, 12B, ...., 12X); a switch signal generator 20 for controlling the multiplexer 16 in correspondence with the control signal generated by the image inputter 10; and an image outputter 18 for sequentially outputting the memory contents of the plurality of temporary storers 12 (12A, 12B, ...., 12X) read by the multiplexer 16 after converting them into an analog video signal.

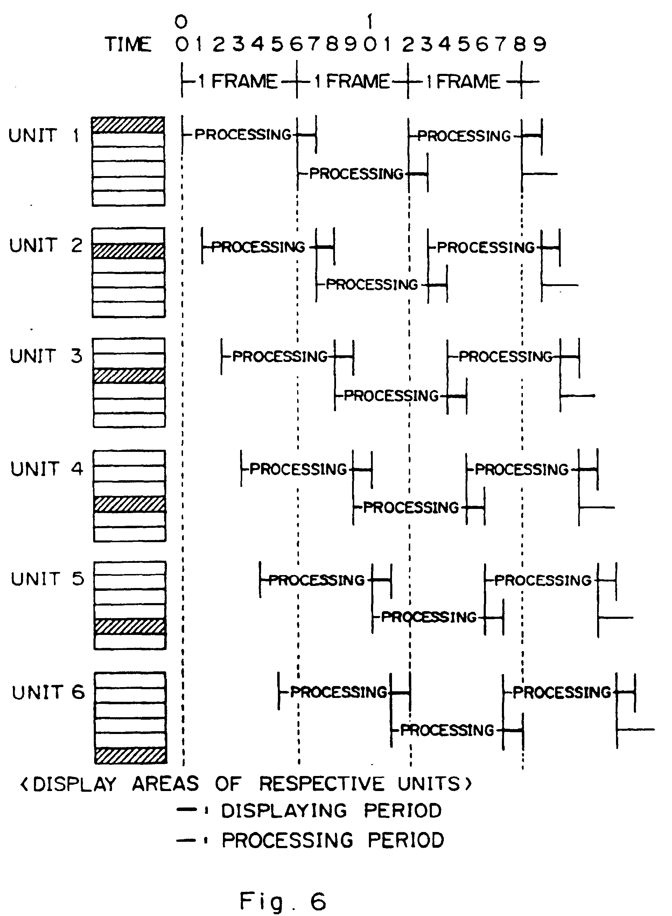

Figure 6 is a timing chart showing operations pursuant to the second principle.

Operations pursuant to the second principle are explained below by referring to Figure 6.

Here, six [6] units 1, 2, 3, 4, 5 and 6 independently perform parallel processes each for one-sixth [1/6] of respective frames.

The first and second principle of a moving image processor described above are not subject-matter of the present invention but are conducive to better understanding of this invention.

### A Third Principle

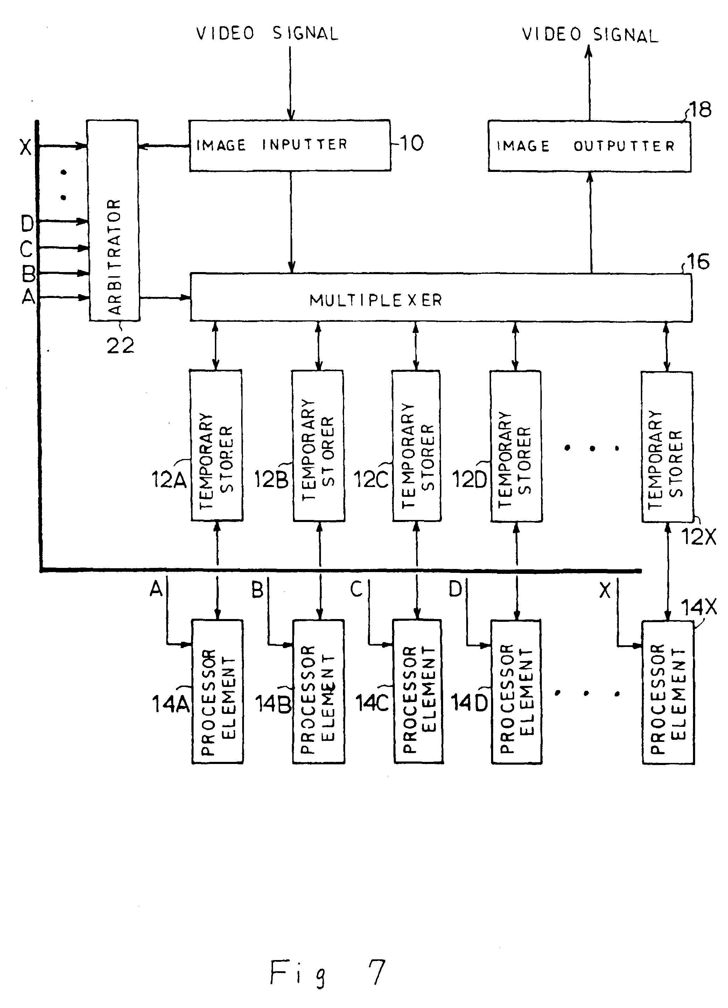

Figure 7 is a block diagram showing a third principle of a moving image processor, according to which the invention is constructed.

A moving image processor pursuant to the third principle of this invention comprises an image inputter 10 for converting a video signal being analog into a digital signal in a time series and for generating a control signal synchronized with frames of the video signal; a plurality of temporary storers 12 (12A, 12B, ...., 12X) into which the digital signal is written in frame units of the video signal; a plurality of processor elements 14 (14A, 14B, ...., 14X) respectively for processing image data being memory contents of the plurality of temporary storers 12 (12A, 12B, ...., 12X) and for emitting consummation notice signals indicating processing consummations; a multiplexer 16, synchronized with the control signal, for sequentially writing the digital signal converted from one [1] frame of the video signal to the plurality of temporary storers 12 (12A, 12B, ...., 12X) and for sequentially reading the memory contents from the plurality of temporary storers 12 (12A, 12B, ...., 12X); an image outputter 18 for sequentially outputting the memory contents of the temporary storers 12 (12A, 12B, ...., 12X) read by the multiplexer 16 after converting them into an analog video signal; and an arbitrator 22 for delaying a readout by the multiplexer 16 from the one in the plurality of temporary storers 12 (12A, 12B, ...., 12X) corresponding to the one in the plurality of processor elements 14 (14A, 14B, ...., 14X) whose consummation notice signal has not yet arrived.

Operations pursuant to the third principle are explained below.

Here, although six [6] units 1, 2, 3, 4, 5 and 6 independently perform parallel six [6] processes for each one [1] frame as with the configuration to the first principle, because the arbitrator 22 delays an output of a frame not yet completely processed until the six [6] units 1, 2, 3, 4, 5 and 6 complete the processes for it, a partially drawn fragmentary image is not displayed, thereby ensuring constantly good quality of a moving image.

### Detailed Description

The first and second example of a moving image processor based on the first and second principle of a moving image processor, respectively, are not subject-matter of the present invention but are helpful for a better understanding of the present invention.

### A First Example

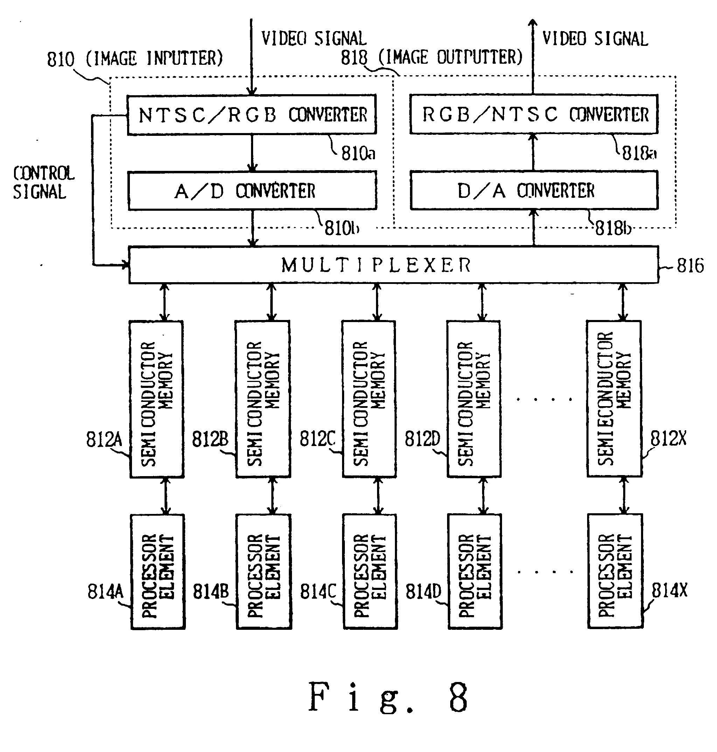

Figure 8 is a block diagram of a first example of a moving image processor.

The first example shown in Figure 8 is based on the first principle shown in Figure 3.

The image inputter 10 shown in Figure 3 converts a color picture signal (a video signal being analog) to an RGB digital signal in a time series, as well as generates a control signal synchronized with a frame of the video signal. Therefore, an image inputter 810 comprises an NTSC/RGB converter 810a for converting an NTSC signal into an RGB signal and an A/D converter 810b for converting the RGB signal obtained by the NTSC/RGB converter 810a into a digital signal in a time series.

The plurality of temporary storers 12 (12A, 12B, ...., 12X) shown in Figure 3 pursuant to the first principle comprise a plurality of semiconductor memories 812 (812A, 812B, ...., 812X) each comprising a dual-port memory having a memory capacity enough for recording data of two [2] frames for an input/output purpose. The digital signal is written into the plurality of semiconductor memories 812 (812A, 812B, ...., 812X) in frame units of the video signal. A plurality of processor elements 814 (814A, 814B, ...., 814X) correspond to the plurality of processor elements 14 (14A, 14B, ,..., 14X) shown in Figure 3 pursuant to the first principle, and perform the processes, including readouts of image data from the plurality of semiconductor memories 812 (812A, 812B, ...., 812X) noise eliminations and write-ins of the image data back to the plurality of semiconductor memories 812 (812A, 812B, ...., 812X) during an image processing, and write-ins of image data of a computer graphic into the plurality of semiconductor memories 812 (812A, 812B, ...., 812X) during a moving image reconstruction.

A multiplexer 816 corresponds to the multiplexer 16 shown in Figure 3 pursuant to the first principle and controls the write-ins to and readouts from the plurality of semiconductor memories 812 (812A, 812B, ...., 812X). The multiplexer 816 comprises an IC logic circuit. The multiplexer 816, synchronized with a control signal of the NTSC/RGB converter 810a, sequentially writes the digital signal from the A/D converter 810b to the plurality of semiconductor memories 812 (812A, 812B, ...., 812X) in frame units of the video signal and sequentially reads the memory contents from the plurality of semiconductor memories 812 (812A, 812B, ...., 812X).

A D/A converter 818b in an image outputter 818 converts into an analog signal the memory contents read from the plurality of semiconductor memories 812 (812A, 812B, ...., 812X) by the multiplexer 816. Then, an RGB/NTSC converter 818a also in the image outputter 818 converts the analog signal into an NTSC signal (a video signal being analog).

In the first example, picture screen images sequentially inputted into the image inputter 810 are written via the multiplexer 816 into the plurality of semiconductor memories 812 (812A, 812B, ...., 812X) in frame (screen) units, whose processes the plurality of processor elements 814 (814A, 814B, ...., 814X) respectively start.

Then, after the plurality of processor elements 814 (814A, 814B, ...., 814X) complete their processes and write post-processed frame data respectively into the plurality of semiconductor memories 812 (812A, 812B, ...., 812X), the plurality of semiconductor memories 812 (812A, 812B, ...., 812X) sequentially output pictures (frame data) via the multiplexer 816 to the image outputter 818.

Consequently, the first example renders it possible to extend the time allowed for the plurality of processor elements 814 (814A, 814B, ...., 814X) to process one [1] frame by their number and reduce the memory access speed to the plurality of semiconductor memories 812 (812A, 812B, ...., 812X) and processing speed of the plurality of processor elements 814 (814A, 814B, ...., 814X) also by their number.

Accordingly, a provision of a plurality of conventional lower-performance processing units [respectively comprising the plurality of semiconductor memories 812 (812A, 812B, ...., 812X) and the plurality of processor elements 814 (814A, 814B, ...., 814X)] enable low cost hardware to process a moving image as with higher performance conventional hardware.

Also, because the number of processing units can be adjusted to the required processing power, hardware can be modified quite easily. Further, because respective processing units are not pipelined, they can independently operate in parallel, which makes it easier to flexibly alter the processing matters.

The structures of respective parts in the first example are described in further detail below. A control signal is derived from a vertical synchronous signal (VSYNC) by the NTSC/RGB converter 810a and is applied to the multiplexer 816 to switch written/read one of the plurality of semiconductor memories 812 (812A, 812B, ...., 812X).

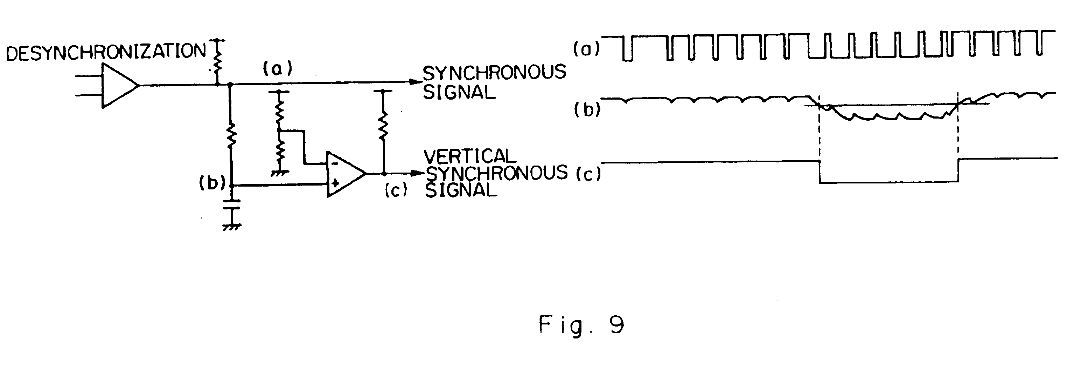

Figure 9 shows the configuration and operation of a vertical synchronous pulse regenerator provided in the NTSC/RGB converter 810a.

More specifically, the left hand side of Figure 9 is a circuit diagram of an extractor for desynchronizing a vertical synchronous signal (VSYNC) from a composite synchronous signal. A signal (a) shown in the right hand side of Figure 9 represents a composite synchronous signal. A signal (b) shown in the right hand side of Figure 9 designates a signal at a point (b). A signal (c) shown in the right hand side of Figure 9 represents a vertical synchronous signal (VSYNC) obtained by an integral circuit and a comparator.

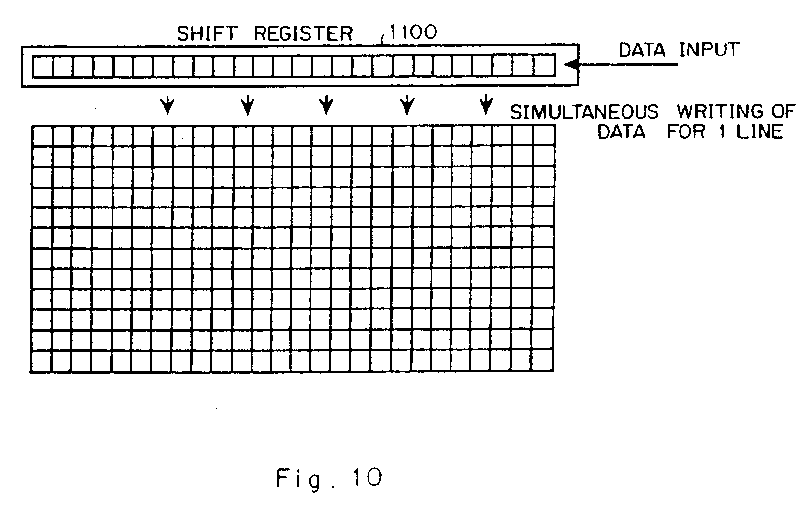

Figure 10 is an explanatory chart for writing data into a temporary storer.

The multiplexer 816 outputs the image data inputted from the image inputter 810 to the plurality of semiconductor memories 812 (812A, 812B, ...., 812X). At this time, image data of one [1] line are sequentially written into a shift register 1100, firstly, as shown in Figure 10. After the shift register 1100 stores the image data of one [1] line, they are simultaneously written into the plurality of semiconductor memories 812 (812A, 812B, ...., 812X), secondly.

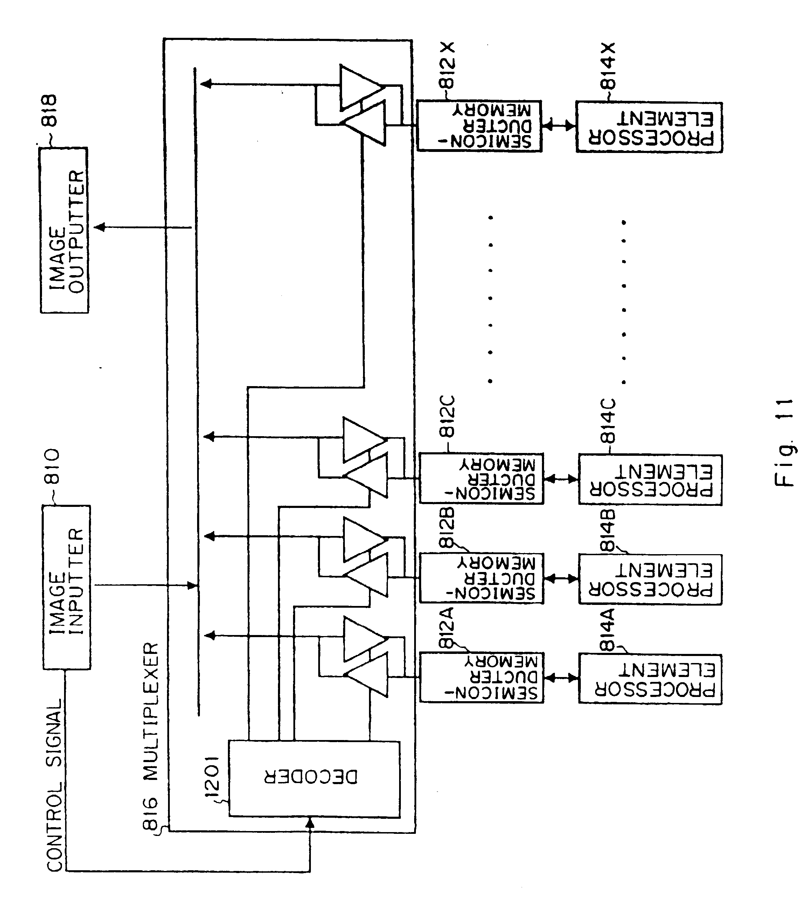

Figure 11 is a block diagram of a multiplexer.

The multiplexer 816 comprises primarily a decoder 1201, and a plurality of buffer gates 1202 (1202A, 1202B, ...., 1202X) and a plurality of buffer gates 1203 (1203A, 1203B, ...., 1203X) respectively provided in the plurality of semiconductor memories 812 (812A, 812B, ...., 812X). The plurality of buffer gates 1202 (1202A, 1202B, ...., 1202X) receive as their inputs image data from the image inputter 810 and supply as their outputs the image data respectively to the plurality of semiconductor memories 812 (812A, 812B, ...., 812X). The plurality of buffer gates 1203 (1203A, 1203B, ...., 1203X) receive as their inputs image data respectively from the plurality of semiconductor memories 812 (812A, 812B, ...., 812X) and supply as their outputs the image data to the image outputter 818. The decoder 1201 decodes the control signal which is received from the image inputter 810 and includes the vertical synchronous signal, selects any of the pluralities of buffer gates 1202 (1202A, 1202B, ...., 1202X) and 1203 (1203A, 1203B, ...., 1203X) to be turned ON and turns ON only the selected one. For example, when the control signal turns buffer gate 1202A ON, buffer gate 1202A supplies one [1] frame of image data from the image inputter 810 to semiconductor memory 812A.

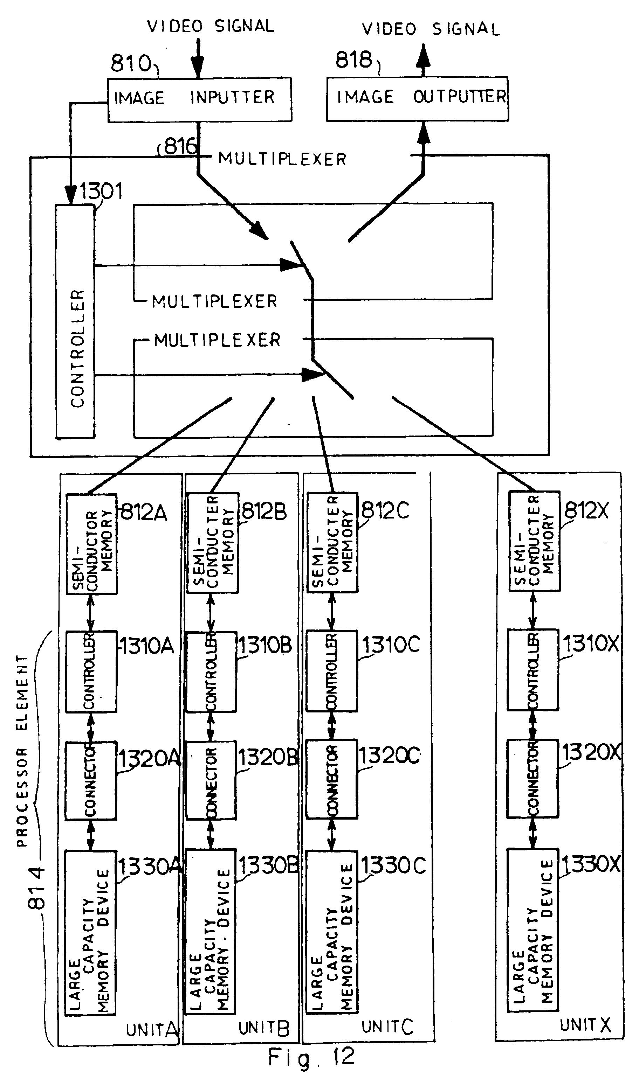

Figure 12 is an explanatory chart illustrating the configuration of a multiplexer for use in the first example.

The multiplexer 816 comprises a controller 1301 corresponding to the decoder 1201 shown in Figure 12 and multiplexer elements each comprising a group of buffer gates. The group of buffer gates configured as shown in Figure 10 enable any one of a plurality of units (A, B, ...., X) [respectively comprising the plurality of semiconductor memories 812 (812A, 812B, ...., 812X) paired with the plurality of processor elements 814 (814A, 814B, ...., 814X)] to be connected to the image inputter 810 or the image outputter 818. That is, the multiplexer 816 works both as a multiplexer for selecting either the image inputter 810 or the image outputter 818 and as a multiplexer for selecting one of the plurality of units (A, B, ..., X).

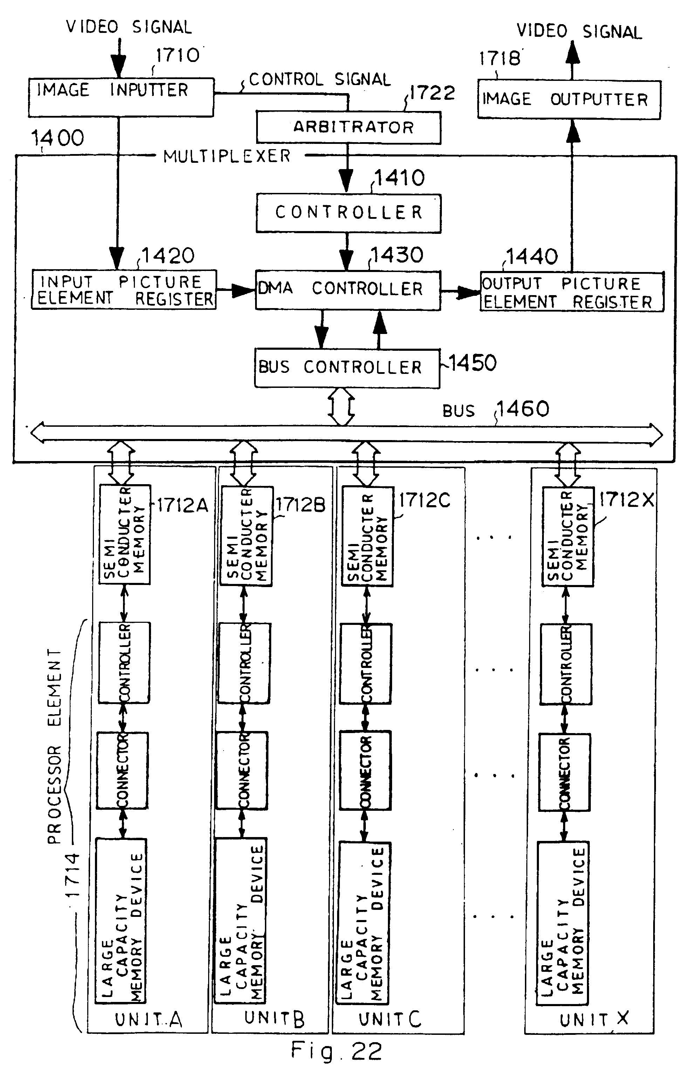

The multiplexer structure shown in Figure 12 causes the image data supplied from the image inputter 810 to be sequentially written into any of the plurality of semiconductor memories 812 (812A, 812B, ...., 812X). It also causes the image data read, e.g. according to the NTSC output cycle, from any of the plurality of semiconductor memories 812 (812A, 812B, ...., 812X) to be outputted from the image outputter 818. Hence, because a division and an integration of an image is performed by using a sequential digital image signal, it does not require an address bus, a DMA controller or a bus controller, and costs less than a multiplexer structure using a bus system (which is shown in Figure 22).

The first example quite easily realizes such things as regenerating a picture after eliminating only the commercials from the recorded picture by successively playing prerecorded picture in a desired sequence and creating a picture expression in which two [2] scenes are contemporaneously in progress by alternately regenerating two [2] scenes separately recorded.

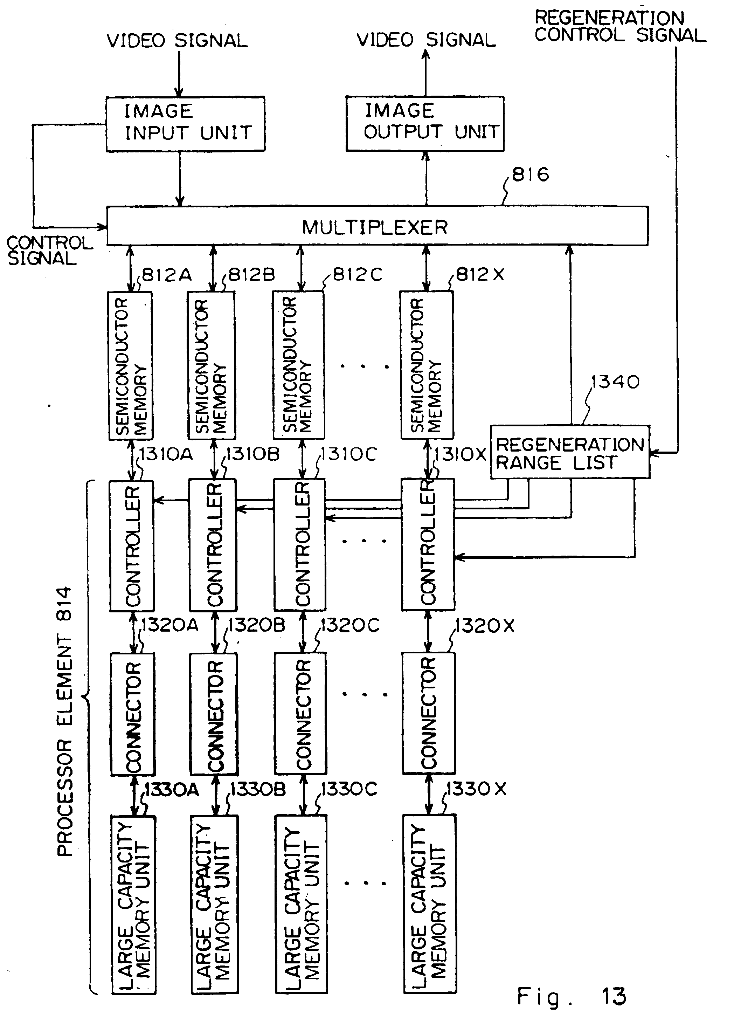

Figure 13 shows a circuit in which a range of regeneration frames can be controlled.

As described before, the plurality of units (A, B, ...., X) respectively comprise the plurality of semiconductor memories 812 (812A, 812B, ...., 812X) paired with the plurality of processor elements 814 (814A, 814B, ...., 814X). The plurality of processor elements 814 (814A, 814B, ...., 814X) respectively comprise a plurality of controllers 1310 (1310A, 1310B, ...., 1310X), a plurality of connectors 1320 (1320A, 1320B, ...., 1320X) and a plurality of large capacity memory devices 1330 (1330A, 1330B, ...., 1330X). By using a memory unit in each of the plurality of large capacity memory devices 1330 (1330A, 1330B, ...., 1330X) as a block, picture frames 0 through 5 are stored in a sequence from A0 (block 0 in unit A), through B0 (block 0 in unit B), C0 (block 0 in unit C) and DO (block 0 in unit D), to A1 (block 1 in unit A).

Assume here that a host designates a frame range to be played by a regeneration control signal. A designated frame number is outputted from regeneration range list unit 1340. The regeneration range list unit 1340 is referred to of the multiplexer 816 and each controller 1310. A content of the regeneration range list unit 1340 is shown in Figure 1-4 and the regeneration range list 1341 comprises the number of regeneration sequences, and a plurality of pairs of the starting frame number and ending frame number.

For example, one hundred fiftieth [150th] frame through one hundred ninety-ninth [199th] frame are set in a regeneration range list 1341. The plurality of controllers 1310 (1310A, 1310B, ...., 1310X) respectively in the plurality of units A, B, ...., X analyze this, and regenerate the memory blocks C37 through D49. The multiplexer 816 starts its connection from unit C, sequentially changes its connection and terminates its connection at unit D.

Similarly, when one hundred fiftieth [150th] frame through one hundred eighty-ninth [189th] frame and two hundred fortieth [240th] frame through two hundred eighty-ninth [289th] frame are set in a regeneration range list 1341 for their successive plays, the plurality of controllers 1310 (1310A, 1310B, ...., 1310X) respectively in the plurality of units A, B, ...., X analyze this, and play the memory blocks C37 through B47 and A60 through B72. The multiplexer 816 starts its connection from unit C, reverts to unit A on reaching unit B after ten [10] cycles, and terminates its connection at unit B after twelve [12] cycles.

Thus, a provision of a regeneration range list 1341 enables where the plurality of controllers 1310 (1310A, 1310B, ...., 1310X) respectively in the units A, B, ...., X and the multiplexer 816 should read and which one of the plurality of units A, B, ...., X is to be connected to be known beforehand, thereby allowing a picture to be randomly played successively.

### A Second Example

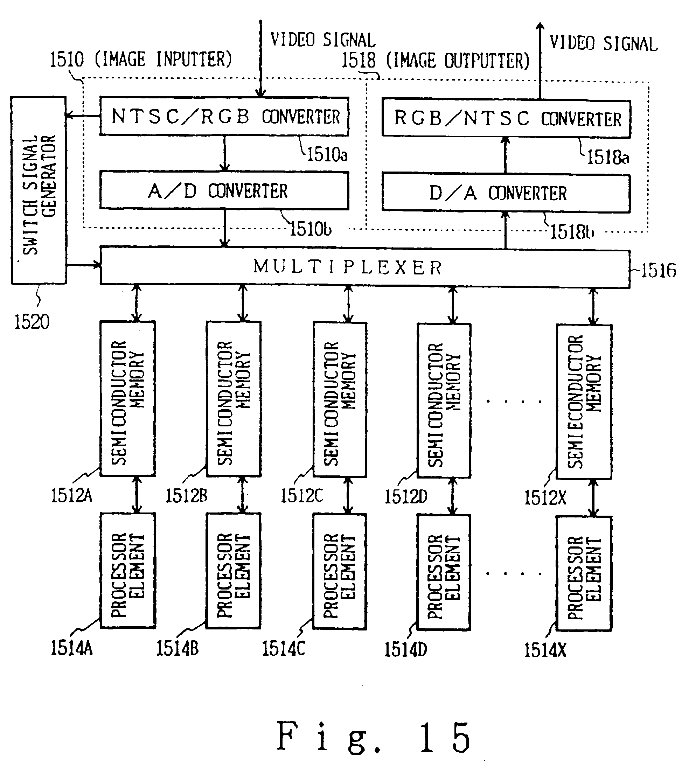

Figure 15 is a block diagram of a second example of a moving image processor.

The second example shown in Figure 15 is based on the second principle shown in Figure 5.

A switch signal generator 1520 shown in Figure 15 outputs to a multiplexer 1516 an operation control signal according to a control signal (vertical/horizontal synchronous signal) from an image inputter 1510.

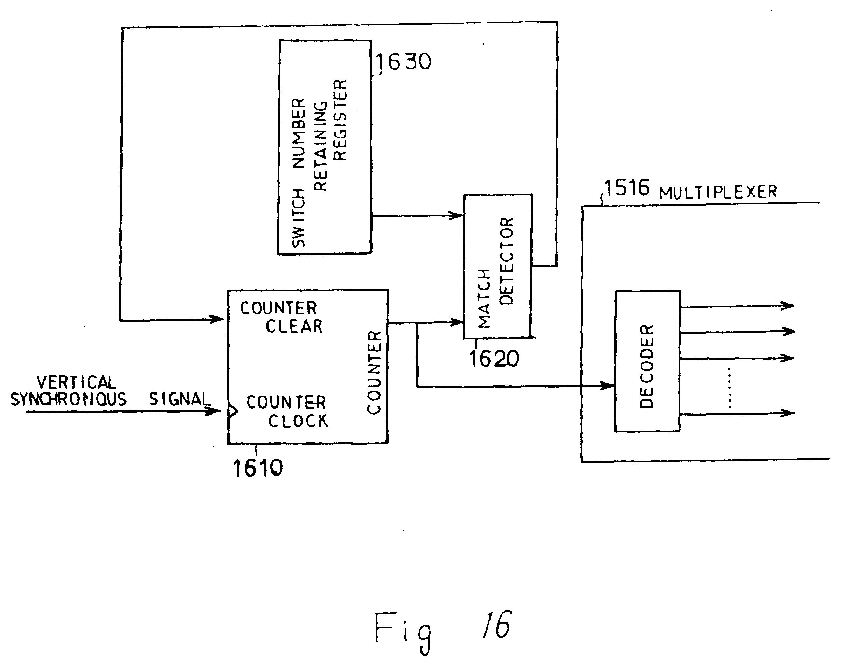

Figure 16 is a block diagram of a switch signal generator shown in Figure 15.

The switch signal generator 1520 is a counter circuit using an IC logic circuit.

The switch signal generator 1520 comprises a counter 1610, a match detector 1620 and a switch number retaining register 1630. On receiving a vertical synchronous signal as its clock, the counter 1610 counts up and supplies the counter output to a decoder of the multiplexer 1516. The multiplexer 1516 for the second preferred embodiment has a pursuant to the multiplexer 816 for the first example shown in Figure 12.

The counter 1610 also supplies its counter output to the match detector 1620, which also receives as another input a value of the switch number retaining register 1630. When a value preset in the switch number retaining register 1630 matches the value of the counter output, the counter 1610 clears its value.

In the second example, a digital signal being RGB converted from a frame of a video signal is time-divided and sequentially written into a plurality of semiconductor memories 1512 (1512A, 1512B, ...., 1512X). Therefore, a time-division number is set in the switch number retaining register 1630 of the switch signal generator 1520. The time-division number is a quotient obtained by dividing the number of processing units [a plurality of units respectively comprising the plurality of semiconductor memories 1512 (1512A, 1512B, ...., 1512X) and a plurality of processor elements 1514 (1514A, 1514B, ...., 1514X)] by the number of lines [stored in the plurality of semiconductor memories 1512 (1512A, 1512B, ...., 1512X)] in a frame. Then, a vertical synchronous signal is counted, and when image data for the number of the lines are written into semiconductor memory 1512A, the next line emits a signal for writing image data into semiconductor memory 1512B.

Therefore, a plurality of processing units share the processes for a single image.

### A First Preferred Embodiment

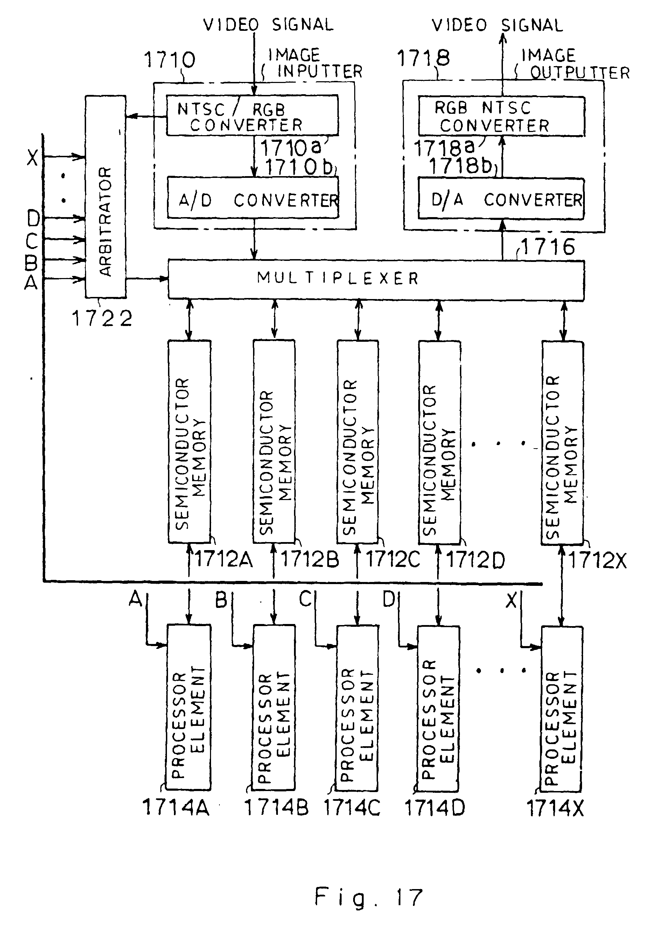

Figure 17 is a block diagram of a first preferred embodiment of a moving image processor according to this invention.

The first preferred embodiment shown in Figure 17 is based on the third principle a moving image processor shown in Figure 7.

The configuration of the first preferred embodiment shown in Figure 17 is obtained by adding an arbitrator 1722 to the configuration of the first example shown in Figure 8.

In third preferred embodiment, a plurality of image processing units A, B, ...., X respectively comprise a plurality of semiconductor memories 1712 (1712A, 1712B, ...., 1712X) and a plurality of processor elements 1714 (1714A, 1714B, ...., 1714X) each being connected to a large capacity memory device. The first preferred embodiment is premised on a system for displaying a moving image by sequentially switching an image obtained as processing results from the plurality of image processing units. It has a feature that a provision of the arbitrator 1722 prevents a partly processed fragmentary image from being displayed.

The arbitrator 1722 checks, synchronized with a timing signal (e.g. a VSYNC: vertical synchronous signal), whether or not the next displaying one of the plurality of image processing units has completed its image creation. If its image creation is complete, the arbitrator 1722 sends to a multiplexer 1716 for switching the currently displaying one to the next displaying one of the plurality of image processing units. If the image creation is incomplete, the arbitrator 1722 causes the currently displayed image to be continually displayed. Because generally two [2] or three [3] displays of the same frame does not arouse any awkwardness, it is all right to substitute a missing image by a preceding image. The multiplexer 1716 is constructed as shown in Figures 11 and 12.

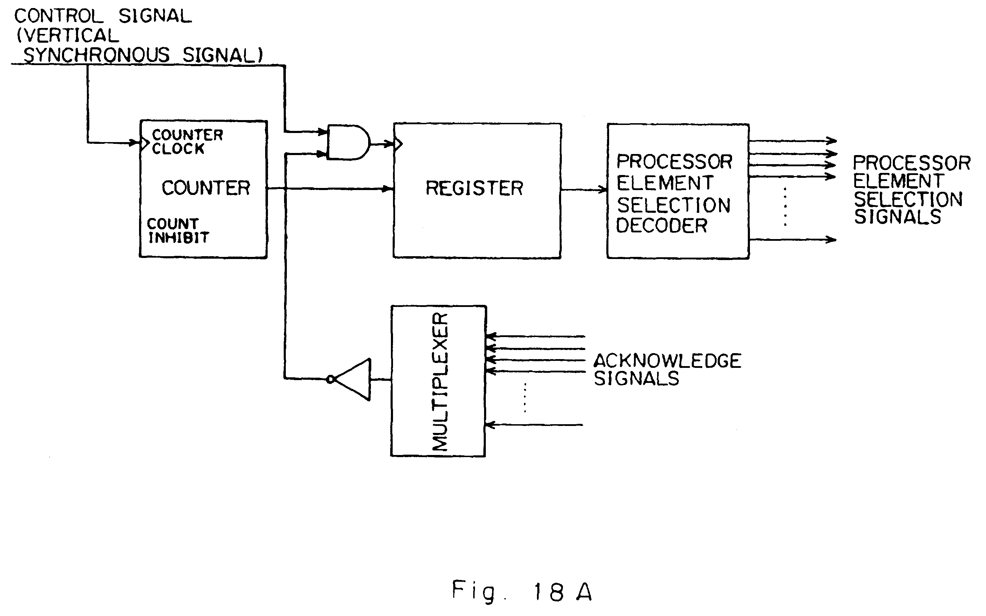

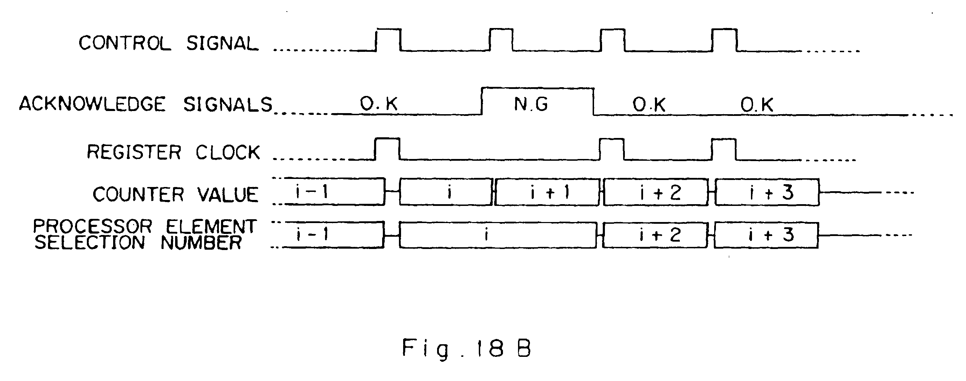

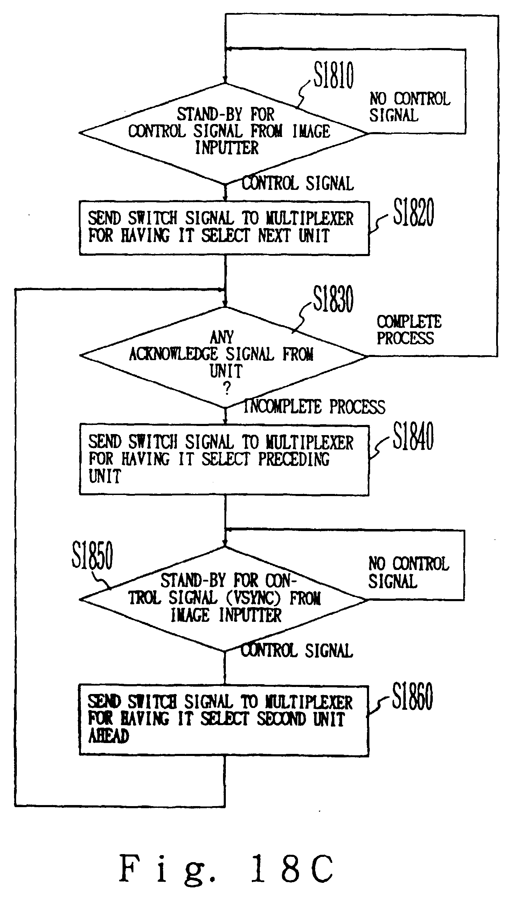

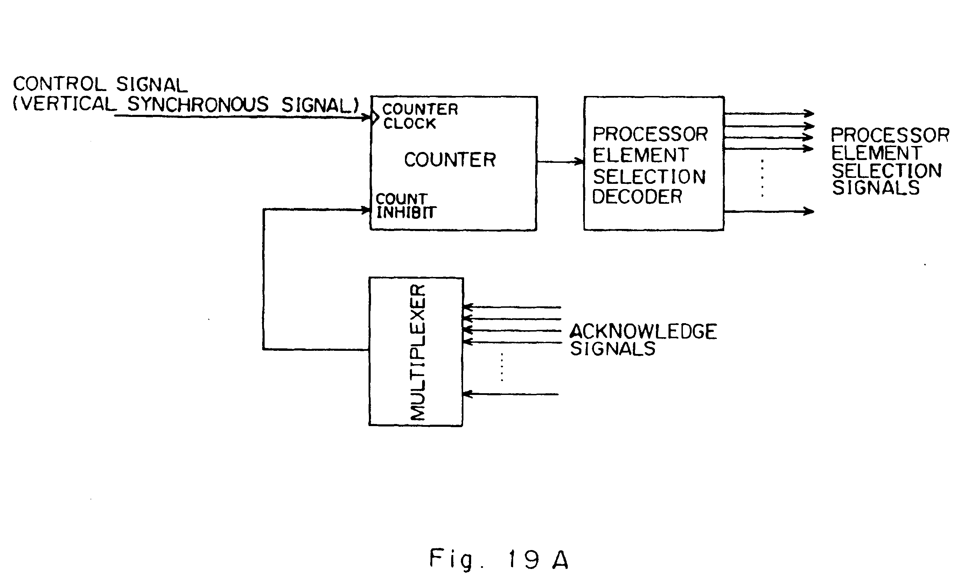

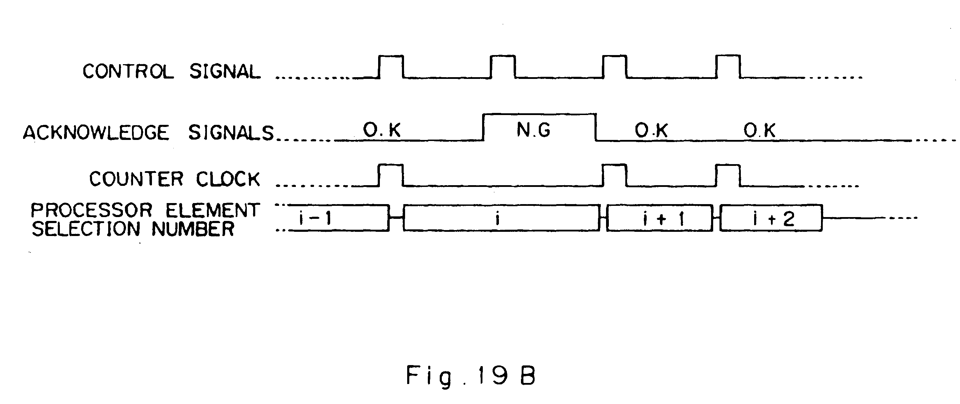

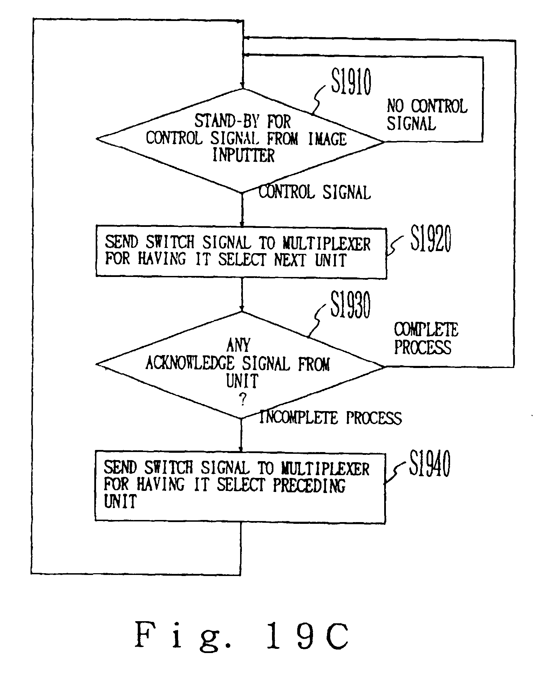

There are two [2] methods for dealing with the missing images.
[1] By ignoring an incomplete image processing unit, skip to the image processing unit next to the incomplete image processing unit at the next timing. (Refer to Figures 18A, 18B and 18C.)
[2] By waiting for the processing completion of an incomplete image processing unit, switch the now-complete incomplete image processing unit at the next timing. (Refer to Figures 19A, 19B and 19C.)

Figure 18A is a block diagram of an arbitrator for an operation in a first case without a wait for an incomplete unit.

A plurality of acknowledge signals and a plurality of processor element selection signals control the arbitrator 1722 and the plurality of processor elements 1714 (1714A, 1714B, ...., 1714X) in the respective image processing units. Each of the plurality of acknowledge signals notifies the arbitrator 1722 of the completion of the process by the corresponding one of the plurality of processor elements 1714 (1714A, 1714B, ...., 1714X). Each of the plurality of processor element selection signals notifies of the corresponding one of plurality of the processor elements 1714 (1714A, 1714B, ...., 1714X) of whether or not the multiplexer 1716 selects it. Thus, the plurality of processor elements 1714 (1714A, 1714B, ...., 1714X) can come to know whether or not the home units are being selected.

Figure 18C is a control flowchart for the operation of the arbitrator in the first case without a wait for an incomplete unit.
S1810: The arbitrator 1722 stands by for a control signal from the image inputter 1710.
S1820: On receiving a control signal, the arbitrator 1722 emits a switch signal to the multiplexer 1716 for having the multiplexer 1716 select the next unit.
S1830: If the acknowledge signal from the unit indicates a process completion, the arbitrator 1722 reverts to step S1810 and stands by for the next control signal. If the acknowledge signal from the unit does not indicate a process completion, the arbitrator 1722 proceeds to step S1840.
S1840: The arbitrator 1722 emits a switch signal to the multiplexer 1716 for having the multiplexer 1716 select the preceding unit.
S1850: The arbitrator 1722 waits for a control signal from the image inputter 1710.
S1860: On receiving a control signal, the arbitrator 1722 emits a switch signal to the multiplexer 1716 for having the multiplexer 1716 select a second unit ahead. Then, the arbitrator 1722 reverts to step S1830.

Figure 18B is a timing chart for the operation of the arbitrator in the first case without a wait for an incomplete unit.

More specifically, Figure 18B shows the timings of arbitrating functions, when the arbitrator 1722 follows the flow of steps illustrated in Figure 18C.

That is, when processor element i+1 has not completed its process, its acknowledge signal is NG, and a register clock becomes ineffective. As a result, a counter value becomes i+1, but a register output is fixed at i, and the processor element selection number i+2, which indicates a second processor element ahead is outputted at the next timing of the control signal.

Figure 19A is a block diagram of an arbitrator for an operation in a second case with a wait for an incomplete unit.

As with the description of Figure 18A, a plurality of acknowledge signals and a plurality of processor element selection signals control the arbitrator 1722 and the plurality of processor elements 1714 (1714A, 1714B, ...., 1714X) in the respective image processing units. Each of the plurality of acknowledge signals notifies the arbitrator 1722 of the completion of the process by the corresponding one of the plurality of processor elements 1714 (1714A, 1714B, ...., 1714X). The arbitrator 1722 can read only the acknowledge signal from the unit currently being selected. Each of the plurality of processor element selection signals notifies of the corresponding one of plurality of the processor elements 1714 (1714A, 1714B, ...., 1714X) of whether or not the multiplexer 1716 select it. Thus, the plurality of processor elements 1714 (1714A, 1714B, ...., 1714X) can come to know whether or not the home units are being selected.

Figure 19C is a control flowchart for the operation of the arbitrator in the second case with a wait for an incomplete unit.
S1910: The arbitrator 1722 stands by for a control signal from the image inputter 1710.
S1920: On receiving a control signal, the arbitrator 1722 emits a switch signal to the multiplexer 1716 for having the multiplexer 1716 select the next unit.
S1930: If the acknowledge signal from the unit indicates a process completion, the arbitrator 1722 reverts to step S1910 and stands by for the next control signal. If the acknowledge signal from the unit does not indicate a process completion, the arbitrator 1722 proceeds to step S1940.
S1940: The arbitrator 1722 emits a switch signal to the multiplexer 1716 for having the multiplexer 1716 select the preceding unit. The arbitrator 1722 waits for a control signal from the image inputter 1710. Then, the arbitrator 1722 reverts to step S1910.

Figure 19B is a timing chart for the operation of the arbitrator in the second case with a wait for an incomplete unit.

More specifically, Figure 19B shows the timings of arbitrating functions, when the arbitrator 1722 follows the flow of steps illustrated in Figure 19C.

That is, when processor element i+1 has not completed its process, its acknowledge signal is NG, and a counter receives a count inhibit signal. As a result, a counter clock is inhibited and a counter value i is retained.

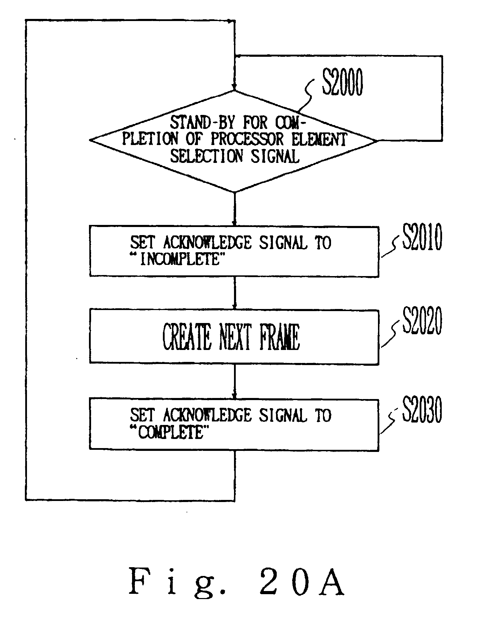

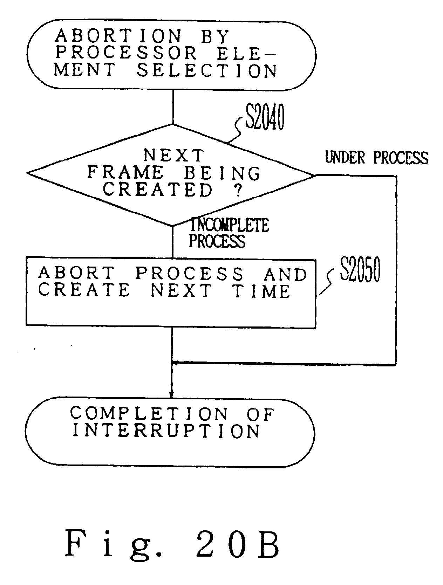

Figures 20A and 20B are control flowcharts for a processor element.

More specifically, Figures 20A and 20B show the flow of operations by each of the plurality of processor elements 1714 (1714A, 1714B, ...., 1714X).
S2000: Each of the plurality of processor elements 1714 (1714A, 1714B, ...., 1714X) stands by for a completion of its processor element selection signal.
S2010: On receiving a completion of its processor element selection signal, each of the plurality of processor elements 1714 (1714A, 1714B, ...., 1714X) sets its acknowledge signal to "incomplete".
S2020: Each of the plurality of processor elements 1714 (1714A, 1714B, ...., 1714X) creates the next frame.
S2030: Then, after the process is complete, each of the plurality of processor elements 1714 (1714A, 1714B, ...., 1714X) sets its acknowledge signal to "complete".

Each of the plurality of processor elements 1714 (1714A, 1714B, ...., 1714X) parallelly perform processes in steps S2000 through S2030 shown in Figure 20A. No timing adjustments are required among the units, whose operations are dependent solely on the plurality of processor element selection signals.

The first case without a wait for an incomplete unit (illustrated in Figures 18A, 18B and 18C) further requires steps S2040 and S2050 shown in Figure 20B.

That is, a processor element selection signal interrupts the process of the corresponding one of the plurality of processor elements 1714 (1714A, 1714B, ...., 1714X).
S2040: Each of the plurality of processor elements 1714 (1714A, 1714B, ...., 1714X) judges whether or not the next frame is being created or already processed. If it is being processed, each of the plurality of processor elements 1714 (1714A, 1714B, ...., 1714X) proceeds to S2050. If it is already processed, each of the plurality of processor elements 1714 (1714A, 1714B, ...., 1714X) gets out of an interruption.
S2050: Each of the plurality of processor elements 1714 (1714A, 1714B, ...., 1714X) aborts its process and creates the next frame. Then, each of the plurality of processor elements 1714 (1714A, 1714B, ...., 1714X) gets out of an interruption.

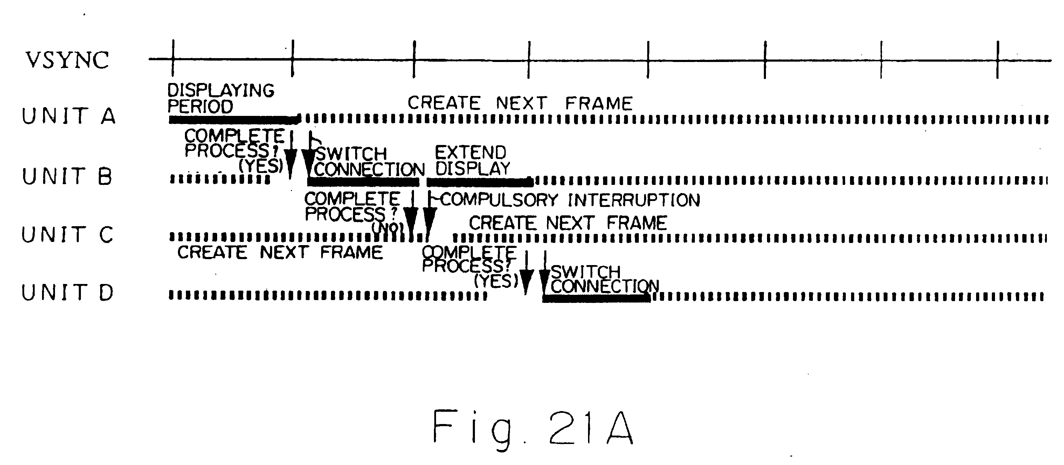

Figure 21A is a timing chart showing operations of the first preferred embodiment of this invention in the first case without a wait for an incomplete unit shown in Figures 18A, 18B and 18C.

Four [4] units A, B, C and D perform their processes. A dot line indicates a processing period for creating a next frame, and a solid line indicates a displaying period.

After a displaying period for unit A is over, the arbitrator 1722 judges whether or not the next unit B has completed its processes. Because it has already completed them, a unit connection is switched, and unit B performs its display. After the displaying period for unit B is over, the arbitrator 1722 judges whether or not the next unit C has completed its processes. Because it has not completed them yet, the processes of unit C are compulsorily aborted in the first preferred embodiment of this invention in the first case without a wait for an incomplete unit. The next frame creation is initiated, and the displaying period of unit B is extended for its continued display. When the extended displaying period of unit B expires, the arbitrator 1722 judges whether the second succeeding unit D has completed its processes. Because it has already completed them, a unit connection is switched for having unit D perform a display.

As such, according to the first preferred embodiment in the first case without a wait for an incomplete unit, an incomplete unit skips to process the next frame without a wait for its process completion, and the preceding unit B continues displaying its image.

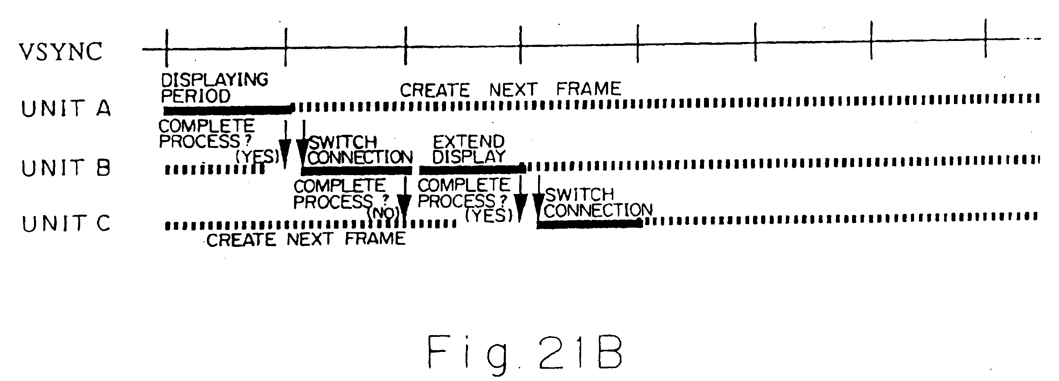

Figure 21B is a timing chart showing operations of the first preferred embodiment of this invention in the second case with a wait for an incomplete unit shown in Figures 19A, 19B and 19C.

Three [3] units A, B and C perform their processes. Again, a dot line indicates a processing period for creating a next frame, and a solid line indicates a displaying period.

After a displaying period for unit A is over, the arbitrator 1722 judges whether or not the next unit B has completed its processes. Because it has already completed them, a unit connection is switched, and unit B performs its display. After the displaying period for unit B is over, the arbitrator 1722 judges whether or not the next unit C has completed its processes. Because it has not completed them yet, in the third preferred embodiment of this invention in the second case with a wait for an incomplete unit, the displaying period of unit B is extended for its continued display. When the extended displaying period of unit B expires, the arbitrator 1722 again judges whether the next unit C has completed its processes. If it has already completed them, a unit connection is switched for having unit C perform a display.

As such, according to the first preferred embodiment in the second case with a wait for an incomplete unit, an incomplete unit continues its processes "as is", and the preceding unit B continues displaying its image.

Figure 22 is a block diagram of a system based on a combination of the arbitrator 1722 and another multiplexer 1400 using the bus system.

The multiplexer 1400 comprises a controller 1410, an input picture element register 1420, a DMA controller 1430, an output picture element register 1440, a bus controller 1450 and a bus 1460. During a division and an integration of an image, the multiplexer 1400 connects each of the plurality of semiconductor memories 1712 (1712A, 1712B, ...., 1712X) to the bus 1460 and sets an address to each of the plurality of semiconductor memories 1712 (1712A, 1712B, ...., 1712X), and transfers data by a DMA (Direct Memory Access) transfer over an address bus and a data bus.

The input picture element register 1420 stores the image data inputted from the image inputter 1710 in picture elements whose values the DMA controller 1430 reads and writes into any of the plurality of semiconductor memories 1712 (1712A, 1712B, ...., 1712X) through the bus controller 1450. The DMA controller 1430 also reads image data from any of the plurality of semiconductor memories 1712(1712A, 1712B, ...., 1712X) through the bus controller 1450 and writs them into the output picture element register 1440. The image outputter 1718 outputs the memory content of the output picture element register 1440 e.g. according to an NTSC output cycle.

### A Second Preferred Embodiment

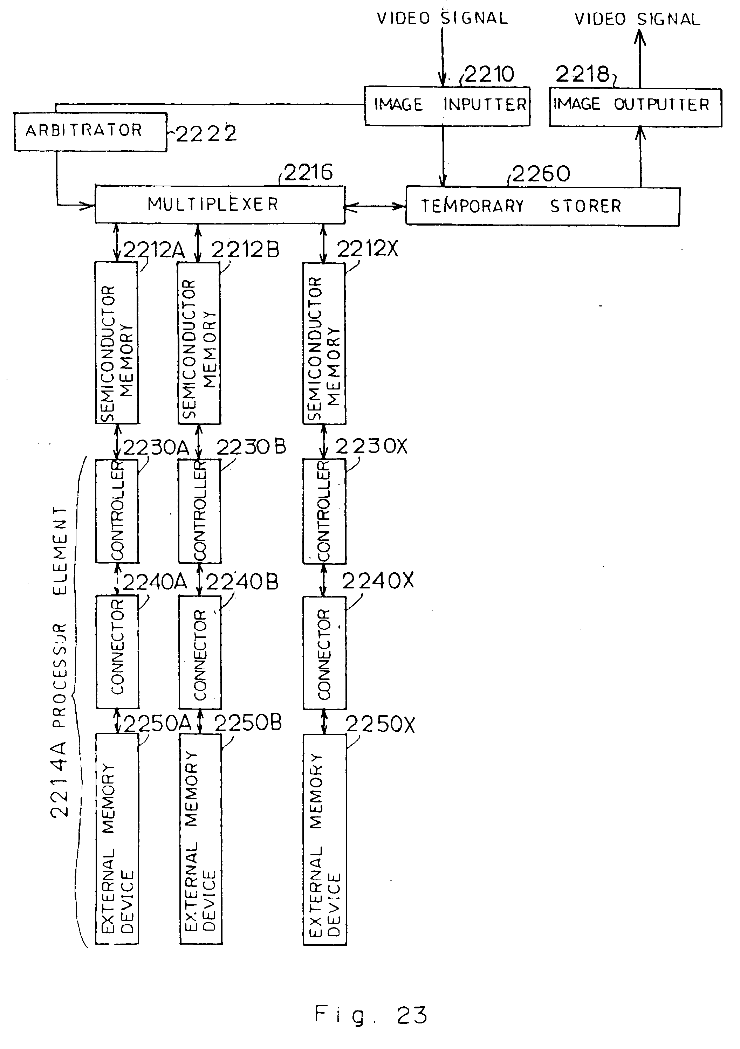

Figure 23 is a block diagram of a second preferred embodiment of this invention.

A configuration of the second preferred embodiment further provides a temporary storer 2260 between a multiplexer 2216 and an image inputter 2210 as well as an image outputter 2218.

In the first embodiment, when a unit has not yet completed its processes, the preceding unit displays a substitute picture. This causes a problem that the preceding unit cannot continue its processes.

To overcome this problem, the second preferred embodiment causes the newly provided temporary storer 2260 to store a displayed picture. When a unit has not yet completed its process, the preceding picture stored in the temporary storer 2260 is re-outputted to the image inputter 2218. This enables the preceding unit to continue its processes, even when a next unit has not yet completed its processes.

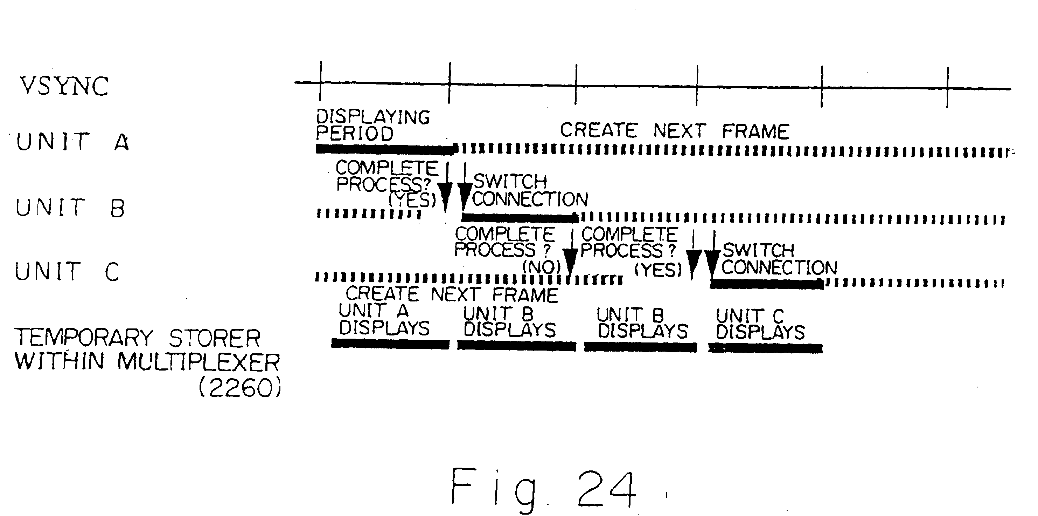

Figure 24 is a timing chart showing an operation of the second preferred embodiment of this invention.

Three [3] units A, B and C perform their processes. Again, a dot line indicates a processing period for creating a next frame, and a solid line indicates a displaying period.

After a displaying period for unit A is over, an arbitrator 2222 judges whether or not the next unit B has completed its processes. Because it has already completed them, a unit connection is switched, and unit B performs its display. This has been exactly the same as the operation in the first preferred embodiment.

After the displaying period for unit B is over, the arbitrator 2222 judges whether or not the next unit C has completed its processes. Because it has not completed them yet, in the fourth preferred embodiment of this invention, the displayed frame of unit B stored in the temporary storer 2260 is outputted to the image outputter 2218 for its continued display, while unit B starts its processes for the next frame and unit C continues its incomplete processes for creating a frame. When the temporary storer 2260 ends outputting frame data, the arbitrator 2222 again judges whether next unit C has completed its processes. If it has already completed them, a unit connection is switched for having unit C perform a display.

As such, according to the second preferred embodiment, the preceding unit B continues its processes, while an incomplete unit also continues its processes "as is".

### A Third Preferred Embodiment

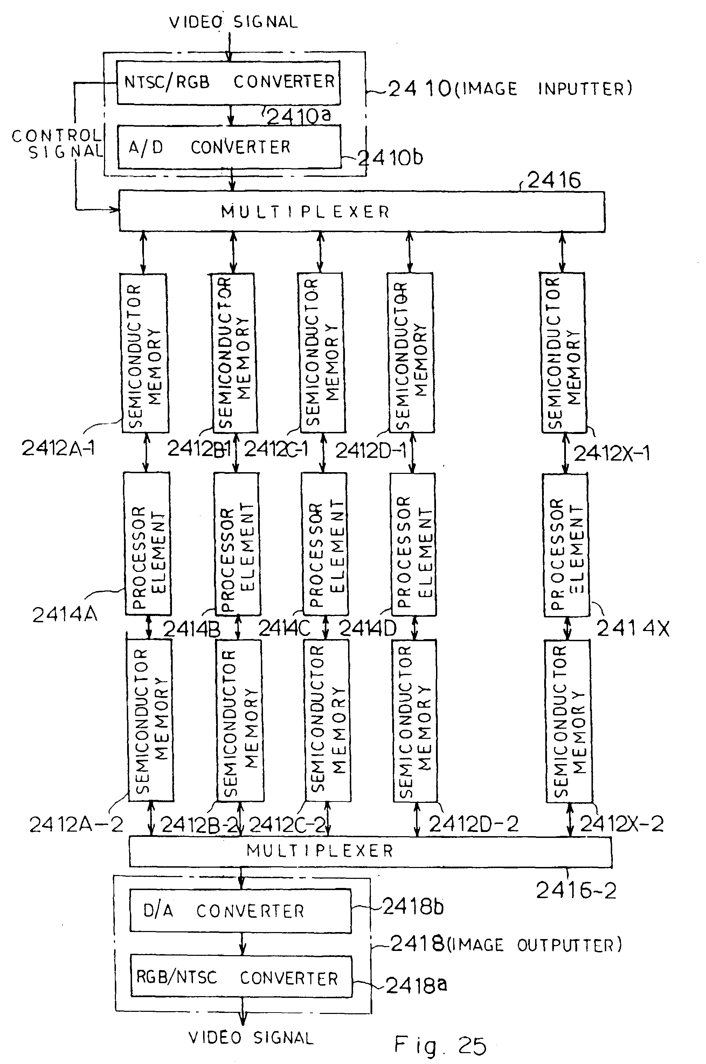

Figure 25 is a block diagram of a third preferred embodiment of this invention.

In the third preferred embodiment of this invention, a multiplexer 2416-1 is provided for an image inputter 2410 and a multiplexer 2416-2 is provided for an image outputter 2418. Multiplexer 2416-1 on the input side connects with a plurality of semiconductor memories 2412-2 (2412A-1, 2412B-1, ...., 2412X-1) for storing image data received as an image input. The plurality of semiconductor memories 2412-2 (2412A-1, 2412B-1, ...., 2412X-1) in turn connect with a plurality of processor elements 2414 (2414A, 2414B, ...., 2414X). Another plurality of semiconductor memories 2412-2 (2412A-1, 2412B-1, ...., 2412X-1) for storing image data supplied as an image output are connected between the plurality of processor elements 2414 (2414A, 2414B, ...., 2414X) and multiplexer 2416-2 on the output side.

The third preferred embodiment enables an inputted frame to be outputted while they are processed.

### A Third Example

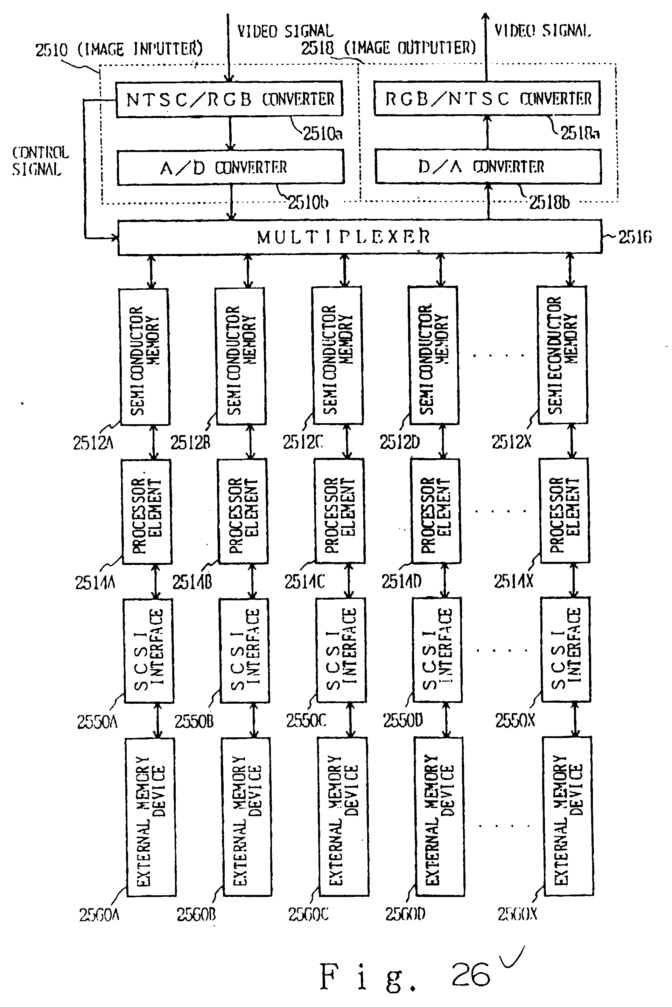

Figure 26 is a block diagram of a third example of a moving image processor.

A configuration of the third example further includes a plurality of external memory devices 2560 (2560A, 2560B, ...., 2560X) respectively connected via a plurality of SCSI interfaces 2550 (2550A, 2550B, ...., 2550X) in addition to the configuration of the first example.

The third example enables such processes as writing "as is" image data read by a plurality of processor elements 2514 (2514A, 25148, ...., 2514X) respectively from the plurality of external memory devices 2560 (2560A, 2560B, ...., 2560X) respectively to the plurality of semiconductor memories 2512 (2512A, 2512B, ...., 2512X), writing processed image data obtained by accessing the plurality of external memory devices 2560 (2560A, 2560B, ...., 2560X) for the plurality of semiconductor memories 2512 (2512A, 2512B, ...., 2512X) respectively to the plurality of semiconductor memories 2512 (2512A, 2512B, ...., 2512X), and writing image data supplied to the plurality of semiconductor memories 2512 (2512A, 2512B, ...., 2512X) respectively to the plurality of external memory devices 2560 (2560A, 2560B, ...., 2560X).

### A Seventh Preferred Embodiment

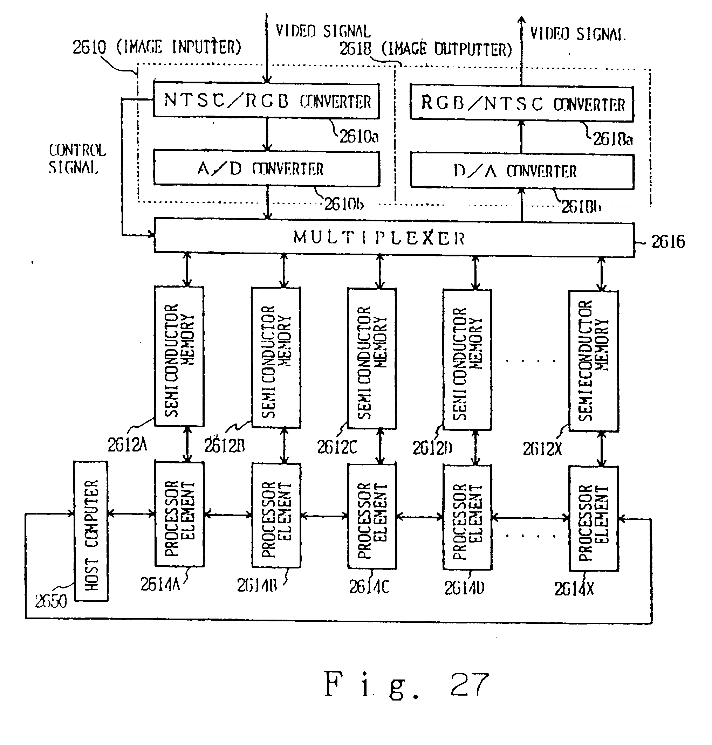

Figure 27 is a block diagram of a fourth example of a moving image processor.

A configuration of the fourth example further includes a host computer 2650 anew in addition to the configuration of the first example. The host computer 2650 and a plurality of processor elements 2614 (2614A, 2614B, ...., 2614X) form a loop connection.

The fourth example enables communications among the plurality of processor elements 2614 (2614A, 2614B, ...., 2614X) to be routed easily, thereby enabling the processing results respectively by the plurality of processor elements 2614 (2614A, 2614B, ...., 2614X) to be readily transferred to the host computer 2650 and the plurality of processor elements 2614 (2614A, 2614B, ...., 2614X) to make processing requests effortlessly to the host computer 2650. Also, the loop connection allows jobs to be transferred in packets, thereby having the plurality of processor elements 2614 (2614A, 2614B, ...., 2614X) having lighter workloads to process the jobs.

## Claims

1. A moving image processor for converting an analog video signal into a digital video signal in a time series and for re-outputting an image as an analog video signal, comprising:
an image inputter means (10, 1710) for converting said analog video signal into a digital video signal as a series of frames and for generating a control signal (VSYNC) synchronized with frames of said video signal so that a multiplexer means to which said control signal is supplied (16, 1716) operates synchronously with the frames of said video signal;
a plurality of temporary storer means (12, 1712) for receiving said digital signal in frame units of said video signal and storing said digital signal before and after a plurality of processor element means (14, 1714) process said digital signal,
said plurality of processor element means (14, 1714) being connected to said plurality of temporary storer means (12, 1712) in a one to one correspondence, for processing image data stored in said plurality of temporary storer means (12, 1712);
said multiplexer means (16, 1716) synchronized with said control signal, and being adapted to sequentially write said digital video signal to said plurality of temporary storer means (12, 1712) in frame units of said video signal and to sequentially read said memory contents from said plurality of temporary storer means (12, 1712); and
an image outputter means (18, 1718) for sequentially outputting said memory contents from said temporary storer means (12, 1712) read by said multiplexer means (16, 1716) after converting them into an analog video signal,
**characterized in that**
the moving image processor further comprises an arbitrator means (1722) for delaying the process of reading the memory contents from one of said plurality of temporary storer means (12, 1712) corresponding to one of said plurality of processor element means (14, 1714), when said one of said plurality of processor element means (14, 1714) has not completed processing a frame of said digital video data, and for continuing to provide as output via said multiplexer and image outputter means (18, 1718) the contents of the previous temporary memory in said reading sequence until either said one of said processor element means (14, 1714) has finished processing said frame or a subsequent processor in said sequence has finished processing a frame.

2. The moving image processing system according to claim 1, wherein said multiplexer means (16, 1716) comprises means for receiving and transmitting (1202, 1203) a sequential digital image signal, means for selecting said inputter means (10, 1710) and outputter means (18, 1718) and means for selecting (1201) one of said temporary storer means (12, 1712).

3. The moving image processing system according to claim 1, further comprising a regeneration range list means (1340), connected to said multiplexer means (16, 1716) and temporary storer means (12, 1712), for designating a list of the numbers of frames to be replayed so that said frames are regenerated in accordance with the list.

4. The moving image processing system according to claim 1, wherein said multiplexer means (16, 1716) is provided with means for temporarily storing said image data which is to be transmitted to said image outputter means (18, 1718).

5. The moving image processing system according to claim 1, further comprising a plurality of large capacity storer means (1330), each provided in one of said processor element means (14, 1714), for writing and reading the image data into and from, respectively, said temporary storer means (12, 1712) under the control of said processor element means (14, 1714).

## Patentansprüche

1. Bewegbildprozessor zur Umwandlung eines analogen Videosignales in ein digitales Videosignal in zeitlicher Folge und zum erneuten Ausgeben eines Bildes in Form eines analogen Videosignals, umfassend:
ein Bildeingabemittel (10, 1710) zur Umwandlung des analogen Videosignales in ein digitales Videosignal in Form einer Folge von Rahmen und zur Erzeugung eines mit Rahmen des Videosignales synchronisierten Steuersignales (VSYNC), so daß ein Multiplexermittel (16, 1716), dem das Steuersignal zugeführt wird, synchron mit dem Rahmen des Videosignales betrieben wird,
mehrere Temporärspeichermittel (12, 1712) zum Empfang des digitalen Signals in Form von Rahmeneinheiten des Videosignales und zum Speichern des digitalen Signales vor und nach der Verarbeitung des digitalen Signales durch mehrere Prozessorelementmittel (14, 1714),
die mehreren Prozessorelementmittel (14, 1714), von denen jeweils eines mit einem der mehreren Temporärspeichermittel (12, 1712) verbunden ist, zur Verarbeitung von in den mehreren Temporärspeichermitteln (12, 1712) gespeicherten Bilddaten,
das mit dem Steuersignal synchronisierte Multiplexermittel (16, 1716), welches derart ausgestaltet ist, daß das digitale Videosignal sequentiell in Form von Rahmeneinheiten des Videosignals in die mehreren Temporärspeichermittel (12, 1712) geschrieben und die Speicherinhalte der mehreren Temporärspeichermittel (12, 1712) sequentiell ausgelesen werden, und
ein Bildausgabemittel (18, 1718) zum sequentiellen Ausgeben der von dem Multiplexermittel (16, 1716) ausgelesenen Speicherinhalte der Temporärspeichermittel (12, 1712) nachdem diese in ein analoges Videosignal umgewandelt worden sind,
**dadurch gekennzeichnet,**
daß der Bewegbildprozessor des weiteren ein Schiedsrichtermittel (1722) aufweist, um den Lesevorgang der Speicherinhalte aus einem dem einen Prozessorelementmittel der mehreren Prozessorelementmittel (14, 1714) entsprechenden Temporärspeichermittel der mehreren Temporärspeichermittel (12, 1712) zu verzögern, wenn das eine Prozessorelementmittel der mehreren Prozessorelementmittel (14, 1714) noch nicht die Verarbeitung eines Rahmens der digitalen Videodaten abgeschlossen hat, und um die Inhalte des in der Lesereihenfolge vorhergehenden Temporärspeichers weiterhin als Ausgabesignal über das Multiplexermittel und das Bildausgabemittel (18, 1718) bereitzustellen bis entweder das eine Prozessorelementmittel der mehreren Prozessorelementmittel (14, 1714) die Verarbeitung des Rahmens oder ein in der Lesereihenfolge nachfolgender Prozessor die Verarbeitung eines Rahmens abgeschlossen hat.

2. Bewegbildprozessorsystem nach Anspruch 1, wobei das Mulitplexermittel (16, 1716) Mittel zum Empfangen und Übertragen (1202, 1203) eines sequentiellen digitalen Bildsignals, Mittel zur Auswahl des Eingabemittels (10, 1710) und des Ausgabemittels (18, 1718) sowie Mittel zur Auswahl (1201) eines der Temporärspeichermittel (12, 1712) umfaßt.

3. Bewegbildprozessorsystem nach Anspruch 1, weiterhin umfassend ein mit dem Multiplexermittel (16, 1716) und dem Temporärspeichermittel (12, 1712) verbundenes Regenerationsbereichslistenmittel (1340) zur Festlegung einer Liste mit der Anzahl der erneut wiederzugebenden Rahmen, so daß die Rahmen erneut in Übereinstimmung mit der Liste erzeugt werden.

4. Bewegbildprozessorsystem nach Anspruch 1, wobei das Multiplexermittel (16, 1716) mit Mitteln zum temporären Speichern der an das Bildausgabemittel (18, 1718) zu übertragenden Bilddaten versehen ist.

5. Bewegbildprozessorsystem nach Anspruch 1, weiterhin umfassend mehrere Speichermittel (1330) mit großer Speicherkapazität, von denen jeweils eines in einem der Prozessorelementmittel (14, 1714) vorgesehen ist, um die Bilddaten gesteuert durch das Prozessorelementmittel (14, 1714) in das Temporärspeichermittel (12, 1712) zu schreiben bzw. daraus auszulesen.

## Revendications

1. Dispositif de traitement d'images mobiles, servant à convertir un signal vidéo logique en un signal vidéo numérique, en série par rapport au temps, et à redélivrer une image sous forme d'un signal vidéo analogique, comprenant :
un moyen (10, 1710) d'entrée d'image servant à convertir ledit signal vidéo analogique en un signal vidéo numérique sous la forme d'une série de trames et à produire un signal de commande (VSYNC) synchronisé avec des trames dudit signal vidéo de façon qu'un moyen multiplexeur (16, 1716) auquel ledit signal de commande est fourni fonctionne en synchronisme avec les trames dudit signal vidéo ;
une pluralité de moyens mémoires temporaires (12, 1712) servant à recevoir ledit signal numérique en unités de trames dudit signal vidéo et à mémoriser ledit signal numérique avant et après le traitement dudit signal numérique par une pluralité de moyens éléments de traitement (14, 1714) ;
ladite pluralité de moyens éléments de traitement (14, 1714) étant connectée à ladite pluralité de moyens mémoires temporaires (12, 1712) suivant une correspondance biunivoque, et servant à traiter des données d'image mémorisées dans ladite pluralité de moyens mémoires temporaires (12, 1712);
ledit moyen multiplexeur (16, 1716) étant synchronisé avec ledit signal de commande et étant conçu pour écrire séquentiellement ledit signal vidéo numérique dans ladite pluralité de moyens mémoires temporaires (12, 1712) en unités de trames dudit signal vidéo et pour lire séquentiellement ledit contenu mémorisé de ladite pluralité de moyens mémoires temporaires (12, 1712) ; et
un moyen (18, 1718) de délivrance d'image servant à délivrer séquentiellement ledit contenu mémorisé desdits moyens mémoires temporaires (12, 1712) lu par ledit moyen multiplexeur (16, 1716) après sa conversion en un signal vidéo analogique,
caractérisé en ce que :
le dispositif de traitement d'images mobiles comprend en outre un moyen d'arbitrage (1722) servant à retarder l'opération de lecture du contenu mémorisé d'un moyen de ladite pluralité de moyens mémoires temporaires (12, 1712) correspondant à un moyen de ladite pluralité de moyens éléments de traitement (14, 1714), lorsque ledit moyen de ladite pluralité de moyens éléments de traitement (14, 1714) n'a pas achevé le traitement d'une trame desdites données vidéo numériques, et à continuer de fournir en sortie, via ledit moyen multiplexeur et ledit moyen (18, 1718) de délivrance d'image, le contenu de la précédente mémoire temporaire dans ladite séquence de lecture jusqu'à ce que ou bien ledit moyen de ladite pluralité de moyens d'éléments de traitement (14, 1714) ait achevé le traitement de ladite trame, ou bien un élément de traitement suivant dans ladite séquence ait achevé le traitement d'une trame.

2. Système de traitement d'images mobiles selon la revendication 1, où ledit moyen multiplexeur (16, 1716) comprend un moyen servant à recevoir et émettre (1202, 1203) un signal d'image numérique séquentiel, un moyen servant à sélectionner ledit moyen d'entrée (10, 1710) et ledit moyen de délivrance (18, 1718), et un moyen servant à sélectionner (1201) un moyen de ladite pluralité de moyens mémoires temporaires (12, 1712).

3. Système de traitement d'images mobiles selon la revendication 1, comprenant en outre un moyen (1340) d'indication de liste d'intervalles de régénération, qui est connecté audit moyen multiplexeur (16, 1716) et auxdits moyens mémoires temporaires (12, 1712), servant à indiquer une liste des numéros de trame à reproduire de façon que lesdites trames soient régénérées en fonction de la liste.

4. Système de traitement d'images mobiles selon la revendication 1, où ledit moyen multiplexeur (16, 1716) est doté d'un moyen servant à mémoriser temporairement lesdites données d'image qui doivent être émises à destination dudit moyen (18, 1718) de délivrance d'image.

5. Système de traitement d'images mobiles selon la revendication 1, comprenant en outre une pluralité de moyens mémoires à grande capacité (1330), qui sont chacun prévus dans un moyen de ladite pluralité de moyens éléments de traitement (14, 1714), afin d'écrire et de lire respectivement les données d'images dans lesdits moyens mémoires temporaires (12, 1712) sous commande desdits moyens éléments de traitement (14, 1714).
